# EUROPEAN PATENT SPECIFICATION

(11) **EP 4 070 539 B1**
(45) Date of publication and mention of the grant of the patent: **01.10.2025**
(21) Application number: 20824698.3
(22) Date of filing: 25.11.2020
(51) Int. Cl.: H04N 25/621, H04N 25/77

(54) **SOLID-STATE IMAGING DEVICE AND ELECTRONIC DEVICE**
FESTKÖRPERBILDGEBUNGSVORRICHTUNG UND ELEKTRONISCHE VORRICHTUNG
DISPOSITIF D'IMAGERIE À SEMI-CONDUCTEURS ET DISPOSITIF ÉLECTRONIQUE

(30) Priority: 02.12.2019 JP 2019218403
(43) Date of publication of application: 12.10.2022
(73) Proprietor: Sony Semiconductor Solutions Corporation, Atsugi-shi Kanagawa 243-0014 (JP)
(72) Inventor: TASHIRO, Yoshiaki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2020/043908
(87) International publication number: WO 2021/111958

(56) References cited:
- US-A1- 2004 036 010
- US-A1- 2005 104 089
- US-A1- 2017 359 497
- KUZNETSOV P A ET AL: "Photodetector of Shortwave Infrared Range of Format 640512 Elements with Increased Dynamic Range", JOURNAL OF COMMUNICATIONS TECHNOLOGY AND ELECTRONICS, NAUKA/INTERPERIODICA PUBLISHING, MOSCOW, RU, vol. 64, no. 9, 1 September 2019 (2019-09-01), pages 1034 - 1037, XP036889375, ISSN: 1064-2269, [retrieved on 20190916], DOI: 10.1134/S1064226919090146

## Description

### [Technical Field]

The present disclosure relates generally to a solid-state imaging device and an electronic device and more particularly to a device capable of reducing the occurrence of blooming.

### [Background Art]

In recent years, solid-state imaging elements such as a complementary metal oxide semiconductor ("CMOS") image sensor ("CIS") have been remarkably widespread, and are utilized in various fields in place of film-type imaging devices. The solid-state imaging elements are utilized in place of film-type imaging devices in normal imaging of visible light, and are also remarkably utilized in imaging of non-visible light such as ultraviolet rays, infrared rays, X-rays, and gamma rays.

Further, in an imaging device having a photoelectric conversion film in a solid-state imaging element, there is an imaging device which handles a hole as a carrier for photoelectric conversion. For example, a photoelectric conversion film using a hole as a carrier for photoelectric conversion includes a quantum ("Q") dot, an iridium gallium arsenide ("InGaAs") sensor, and an organic compound. In particular, a solid-state imaging element using InGaAs as a photoelectric conversion film has a low dark current and a narrower energy band gap than silicon and can capture light of a long wavelength such as infrared light and thus is expected to be applied to a highly sensitive infrared camera, for example.
The US patent application publication US 2005/104089 A1 discloses a MOS or CMOS sensor. A MOS or CMOS based photoconductor on active pixel image sensor is known from the US patent application publication US 2004/036010 A1.
From the US patent application publication US 2017/359497 A1 an image sensor is known.
A photodetector is known from Kuznetsov P. A. et al: "Photodetector of Shortwave Infrared Range of Format 640512 Elements with Increased Dynamic Range", JOURNAL OF COMMUNICATIONS TECHNOLOGY AND ELECTRONICS, NAUKA/INTERPERIODICA PUBLISHING, MOSCOW, RU, vol. 64, no. 9, 1 September 2019 (2019-09-01), pages 1034-1037, ISSN: 1064-2269, DOI: 10.1134/S1064226919090146 [retrieved on 2019-09-16].
The Japanese patent application publication JP 2011 130364 A discloses a solid-state imaging apparatus.

### [Citation List]

### [Patent Literature]

[PTL 1]
JP 2011-130364 A

### [Summary of Invention]

### [Technical Problem]

However, the use of an n-type metal-oxide-semiconductor field-effect transistor ("MOSFET") ("NMOS") commonly used in CIS in a pixel circuit makes difficult to form an overflow path in the pixel circuit, which is a path for releasing saturated holes to a constant voltage source. In this case, there is a problem that charges after saturation flow into adjacent pixels through the photoelectric conversion film and blooming occurs.

Therefore, the present disclosure provides a solid-state imaging device and an electronic device which can reduce the occurrence of blooming.

### [Solution to Problem]

According to a first aspect, the present inventio provides a light-detecting device in accordance with independent claim 1. According to a second aspect, the present invention provides an electronic device in accordance with claim 11. Further aspects of the present invention are set forth in the dependent claims, the drawings and the following description. According to certain embodiments of the present disclosure, a solid-state imaging device is provided that includes: a photoelectric conversion unit configured to generate a hole as a photoelectric charge; and a readout circuit that includes a charge holding unit configured to hold the photoelectric charge generated by the photoelectric conversion unit, and a P-type metal oxide semiconductor ("MOS") transistor arranged on a wiring connecting the charge holding unit and a constant voltage source.
According to an embodiment of the present disclosure, there is provided a light detecting device comprising a photoelectric conversion film configured to generate a hole as a photoelectric charge and a readout circuit including a first node configured to hold the photoelectric charge generated by the photoelectric conversion film and a first P-type metal oxide semiconductor (MOS) transistor connected to the first nodeand a constant voltage source. In some embodiments, the readout circuit further includes a second transistor connected to the first node and a third transisitor. In some embodiments, the first node is connected to the photoelectric conversion film and a second node is connected to a gate of the second transistor. In some embodiments, the readout circuit further includes a fourth transistor connected to the first node and the second node and a fifth transistor connected to the first node and the constant voltage source. In some embodiments, the fifth transistor is a P-type MOS transistor. In some embodiments, the fourth transistor is a P-type MOS transistor. In some embodiments, the second and third transistors are P-type MOS transistors. In some embodiments, the second and third transistors are disposed in a first line in a plan view. In some embodiments, the first, fourth, and fifth transistors are disposed in a second line an in parallel in a longitudinal direction in the plan view. In some embodiments, the first P-type MOS transistor is configured to discharge the photoelectric charge held by the electrode to the constant voltage source, the second transistor is configured to configured to cause a voltage of a voltage value corresponding to a charge amount of the photoelectric charge held by the electrode to appear on a signal line,
the third transistor is configured to switch connection between the second transistor and the signal line, the fourth transistor is configured to switch connection between the first node and the second node, and the fifth transistor is configured to discharge the photoelectric charge held by the first node to the constant voltage source. In some embodiments, the readout circuit further includes a voltage domain storage circuit. In some embodiments, the readout circuit further includes a current integration type readout circuit. In some embodiments, the photoelectric conversion film includes one of indium gallium arsenide (InGaAs), indium arsenide antimonide (InAsSb), indium arsenide (InAs), indium antimonide (InSb), mercury cadmium tellurium (HgCdTe), germanium (Ge), a quantum dot, and an organic compound. In some embodiments, the photoelectric conversion film has a p-type impurity region connected to the first node. In some embodiments, an electrode extending from the photoelectric conversion film and an electrode extending from the readout circuit are directly bonded and electrically conductive. In some embodiments, a terminal extending from the photoelectric conversion film and a terminal extending from the readout circuit are connected by a bump electrode and electrically conductive. According to an embodiment of the present disclosure, there is provided an electronic device comprising a pixel array unit in which a plurality of pixels are arranged in row and column directions, a drive circuit configured to drive pixels to be read out in the plurality of pixels, a processing circuit configured to read out pixel signals from the pixels to be read out which are driven by the drive circuit, and a control unit configured to control the drive circuit and the processing circuit. Each of the plurality of pixels includes a photoelectric conversion film configured to generate a hole as a photoelectric charge and a readout circuit including a first node configured to hold the photoelectric charge generated by the photoelectric conversion film and a first P-type metal oxide semiconductor (MOS) transistor arranged on a wiring connecting the first node and a constant voltage source. In some embodiments, the readout circuit further includes a second transistor connected to the first node and a third transisitor. In some embodiments, the electrode is connected to the photoelectric conversion film and a second node is connected to a gate of the second transistor. In some embodiments, the readout circuit further includes a fourth transistor connected to the first node and the second node and a fifth transistor connected to the first node and the constant voltage source.

### Brief Description of Drawings

[fig.1]Fig. 1 is a block diagram illustrating a schematic configuration example of an electronic device according to a first embodiment.
[fig.2]Fig. 2 is a block diagram illustrating a schematic configuration example of an image sensor according to the first embodiment.
[fig.3]Fig. 3 is a circuit diagram of a pixel circuit according to the first embodiment.
[fig.4]Fig. 4 is a diagram for describing the inflow of holes into the adjacent pixels.
[fig.5]Fig. 5 is a diagram for describing the formation of a charge overflow path in the first embodiment.
[fig.6]Fig. 6 is a cross-sectional view of the pixel circuit according to the first embodiment.
[fig.7]Fig. 7 is a circuit diagram of a pixel circuit according to a second embodiment.
[fig.8]Fig. 8 is a timing chart of pixel drive by a global shutter.
[fig.9]Fig. 9 is a diagram illustrating a layout of the pixel circuit according to the second embodiment.
[fig.10]Fig. 10 is a diagram illustrating the arrangement of a plurality of pixel circuits.
[fig.11]Fig. 11 is an arrangement diagram when a P-well tap and an N-well tap are shared.
[fig.12]Fig. 12 is a diagram illustrating another first example of the arrangement of a plurality of pixel circuits.
[fig.13A]Fig. 13A is a diagram illustrating another second example of the arrangement of the plurality of pixel circuits.
[fig.13B]Fig. 13B is a diagram illustrating another third example of the arrangement of the plurality of pixel circuits.
[fig.14]Fig. 14 is a diagram illustrating the potential in a mode of prioritizing the saturation charge number Qs.
[fig.15]Fig. 15 is a diagram illustrating the potential in a mode of prioritizing suppression of blooming.
[fig.16]Fig. 16 is a circuit diagram of a pixel circuit according to a modification example 1 of the second embodiment.
[fig.17]Fig. 17 is a circuit diagram of a pixel circuit according to a modification example 2 of the second embodiment.
[fig.18]Fig. 18 is a circuit diagram of a pixel circuit according to a modification example 3 of the second embodiment.
[fig.19]Fig. 19 is a circuit diagram of a pixel circuit according to a modification example 4 of the second embodiment.
[fig.20]Fig. 20 is a circuit diagram of a pixel circuit according to a third embodiment.
[fig.21]Fig. 21 is a circuit diagram of a pixel circuit according to a fourth embodiment.
[fig.22A]Fig. 22A is a diagram illustrating a plan configuration of a light receiving element.
[fig.22B]Fig. 22B is a diagram illustrating a cross-sectional configuration taken along line B-B' of Fig. 22A.
[fig.23]Fig. 23 is a diagram illustrating a cross-sectional configuration of another light receiving element.
[fig.24]Fig. 24 is a diagram for describing the sharing of poly gates in NMOS and PMOS.
[fig.25]Fig. 25 is a block diagram illustrating an example of a schematic configuration of a vehicle control system.
[fig.26]Fig. 26 is an explanatory diagram illustrating an example of installation positions of a vehicle exterior information detection unit and an imaging unit.
[fig.27]Fig. 27 is a diagram illustrating an example of a schematic configuration of an endoscopic surgery system.
[fig.28]Fig. 28 is a block diagram illustrating an example of a functional configuration of a camera head and a CCU.

### Description of Embodiments

Embodiments of the present disclosure will be described below in detail with reference to the drawings. In each of the following embodiments, the same portions are denoted by the same reference signs, and a repetitive description thereof will be omitted. The following first, third and fourth embodiments are not according to the claimed invention but may include some but not all features as literally defined in the claims and are present for illustration purposes only.

Note that the description will be given in the following order.
1. First Embodiment
2. Second Embodiment , which is an embodiment according to the claimed invention
3. Third Embodiment
4. Fourth Embodiment
5. Application Examples
6. Application to Mobile Body
7. Application to Endoscopic Surgery System

### 1. First Embodiment

### Configuration of Electronic Device

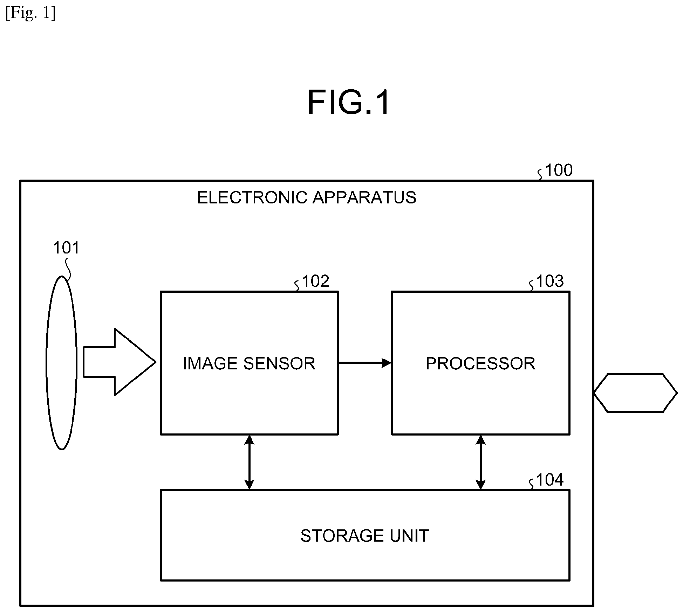

Fig. 1 is a block diagram illustrating a schematic configuration example of an electronic device according to a first embodiment. As illustrated in Fig. 1, an electronic device 100 includes, for example, an imaging lens 101, an image sensor 102, a processor 103, and a storage unit 104.

The imaging lens 101 is an example of an optical system that condenses incident light to form an image on the light receiving surface of the image sensor 102. The light receiving surface may be a surface on which photoelectric conversion elements in the image sensor 102 are arranged. The image sensor 102 photoelectrically converts incident light to generate image data. The image sensor 102 also performs predetermined signal processing such as noise removal and white balance adjustment on the generated image data.

The storage unit 104 may include, for example, a flash memory, a dynamic random access memory ("DRAM"), and a static random access memory ("SRAM"), and records image data such as those inputted from the image sensor 102.

The processor 103 is configured by using, for example, a central processing unit ("CPU"), and may include, for instance, an application processor for executing an operating system and various application software, a graphics processing unit ("GPU"), and a baseband processor. The processor 103 executes various processes as required for image data such as those inputted from the image sensor 102 and those read out from the storage unit 104, displays the image data to the user, and transmits the image data to the outside through a predetermined network, for example.

### Configuration of Image Sensor

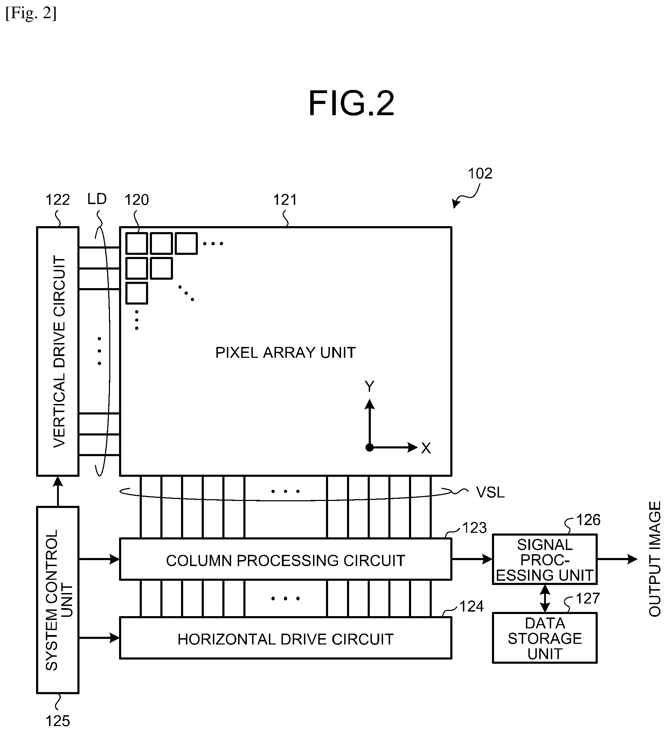

Fig. 2 is a block diagram illustrating a schematic configuration example of an image sensor according to the first embodiment. The image sensor 102 is a CMOS-type image sensor. Here, the CMOS-type image sensor is an image sensor produced by applying or partially using a CMOS process. For example, the image sensor 102 is formed of a back-illuminated type image sensor. The image sensor 102 is an example of a "solid-state imaging device."

The image sensor 102 according to the present embodiment has, for example, a stack structure in which a semiconductor chip on which a pixel array unit 121 is formed and a semiconductor chip on which a peripheral circuit is formed are stacked. The peripheral circuit may include, for example, a vertical drive circuit 122, a column processing circuit 123, a horizontal drive circuit 124, and a system control unit 125.

The image sensor 102 further includes a signal processing unit 126 and a data storage unit 127. The signal processing unit 126 and the data storage unit 127 may be provided on the same semiconductor chip as the peripheral circuit or on another semiconductor chip.

The pixel array unit 121 has a configuration in which unit pixels 120, which may simply be referred to as pixels, each having a photoelectric conversion element for generating and accumulating charges according to the amount of received light are arranged in a two-dimensional lattice shape in the row and column directions, that is, in a matrix. The row direction refers to the arrangement direction (horizontal direction in the drawing) of the pixels of the pixel row, and the column direction refers to the arrangement direction (vertical direction in the drawing) of the pixels of the pixel column. The detailed circuit configuration and pixel structure of the pixel 120 will be described below.

In the pixel array unit 121, a pixel drive line LD is wired along the row direction for each pixel row and a vertical signal line ("VSL") is wired along the column direction for each pixel column with respect to a matrix pixel array. The pixel drive line LD transmits a drive signal for driving when a signal is read out from a pixel. While Fig. 2, illustrates the pixel drive line LD as one wiring, it should be appreciated that in some embodiments multiple pixel drive lines LD may be used. As illustrated in Fig. 2, one end of the pixel drive line LD is connected to an output terminal corresponding to each row of the vertical drive circuit 122.

The vertical drive circuit 122 is in some embodiments constituted by, for example, a shift register and an address decoder, and drives each pixel 120 of the pixel array unit 121 simultaneously with all pixels or in a row unit, for example. In other words, the vertical drive circuit 122 constitutes a drive unit for controlling the operation of each pixel 120 of the pixel array unit 121 together with the system control unit 125 for controlling the vertical drive circuit 122. Although a specific configuration of the vertical drive circuit 122 is not illustrated, the vertical drive circuit may include two scanning systems, a readout scanning system, and a sweep scanning system.

The readout scanning system selectively scans the pixel 120 of the pixel array unit 121 sequentially in units of rows, in order to read out a signal from the pixel 120. The signal read out from the pixel 120 may be an analog signal. The sweep scanning system performs a sweep scan for a readout row in which a readout scan is performed by the readout scanning system prior to the readout scan only by an exposure time.

Unnecessary charges are swept out from the photoelectric conversion elements of the pixels 120 in the readout row by the sweep scanning system, thereby resetting the photoelectric conversion elements. Next, a so-called electronic shutter operation may be performed by sweeping out, i.e., resetting, unnecessary charges in the sweep scanning system. Here, the electronic shutter operation refers to an operation of discarding the charge of the photoelectric conversion element and starting a new exposure, i.e., initiating the accumulation of charge.

The signal read out by the readout operation by the readout scanning system corresponds to the amount of light received immediately before the readout operation or after the electronic shutter operation. The period from the readout timing by the immediately preceding readout operation or the sweep timing by the electronic shutter operation to the readout timing by the current readout operation is the charge accumulation period (also known as exposure period) in the pixel 120.

A signal outputted from each pixel 120 of the pixel row selectively scanned by the vertical drive circuit 122 is inputted to the column processing circuit 123 through each vertical signal line VSL for each pixel column. The column processing circuit 123 performs predetermined signal processing on a signal outputted from each pixel 120 of the selected row through the vertical signal line VSL for each pixel column of the pixel array unit 121, and temporarily holds the pixel signal after signal processing.

Specifically, the column processing circuit 123 performs at least noise removal processing, for example, correlated double sampling ("CDS") processing or double data sampling ("DDS") processing as signal processing. For example, the CDS processing removes fixed pattern noise inherent to a pixel such as reset noise and threshold value variation of an amplifier transistor in the pixel 120. The column processing circuit 123 also has an analog-to-digital ("AD") conversion function, for example, and converts an analog pixel signal read out from the photoelectric conversion element into a digital signal and outputs the digital signal.

The horizontal drive circuit 124 is constituted by a shift register and an address decoder, for example, and sequentially selects readout circuits (hereinafter referred to as a pixel circuit) corresponding to pixel columns of the column processing circuit 123. The selective scanning by the horizontal drive circuit 124 allows the pixel signals subjected to signal processing by the column processing circuit 123 for each pixel circuit to be sequentially outputted.

The system control unit 125 may comprise a timing generator for generating various timing signals, for example, and performs drive control of the vertical drive circuit 122, the column processing circuit 123, and the horizontal drive circuit 124, for example, based on the various timings generated by the timing generator.

In some embodiments, the signal processing unit 126 includes an arithmetic processing function and performs various signal processing such as arithmetic processing on pixel signals outputted from the column processing circuit 123. The data storage unit 127 temporarily stores data necessary for signal processing in the signal processing unit 126.

Note that the image data outputted from the signal processing unit 126 may be subjected to a predetermined process by the processor 103 in the electronic device 100 on which the image sensor 102 is mounted or may be transmitted to the outside via a predetermined network, for example.

### Configuration of Pixel Circuit according to First Embodiment

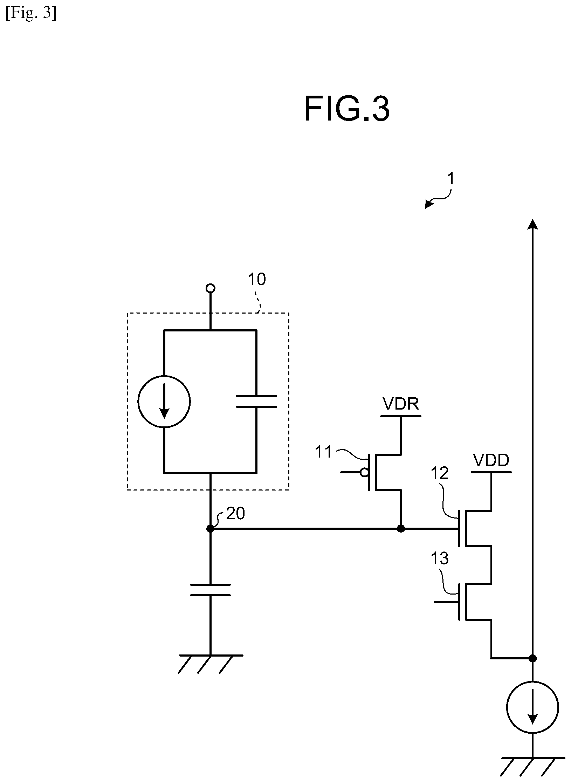

Fig. 3 is a circuit diagram of a pixel circuit according to the first embodiment. The pixel 120 has a pixel circuit 1 illustrated in Fig. 3. The pixel 120 having the pixel circuit 1 is an example of a solid-state imaging device.

The pixel circuit 1 is a three-transistor-type pixel circuit including a photoelectric conversion film (also referred to as a photoelectric conversion unit) 10, a reset ("RST") transistor 11, an amplifier ("AMP") transistor 12, a select ("SEL") transistor 13, and a floating diffusion ("FD") 20 that is a floating diffusion layer. Here, the pixel circuit 1 in which the reset transistor 11, the amplifier transistor 12, the select transistor 13, and the FD 20 are combined is an example of a "readout circuit."

The photoelectric conversion film 10 according to the present embodiment is a photoelectric conversion film in which holes formed using a compound semiconductor such as InGaAs are used as carriers for photoelectric conversion. The photoelectric conversion film 10 may also be formed using, for example, a compound semiconductor such as indium arsenide antimonide ("InAsSb"), indium arsenide ("InAs"), indium antimonide ("InSb"), mercury cadmium tellurium ("HgCdTe") or germanium ("Ge"), a quantum ("Q") dot, or an organic compound.

The photoelectric conversion film 10 is connected to the FD 20. An output terminal of the FD 20 is connected to a source of the reset transistor 11 and a gate of the amplifier transistor 12. A drain of the reset transistor 11 is connected to a low voltage source VDR. The low voltage source VDR is a voltage source having a voltage lower than a voltage source VDD. In addition, a drain of the amplifier transistor 12 is connected to the voltage source VDD. Further, a source of the amplifier transistor 12 is connected to a drain of the select transistor 13. A source of the select transistor 13 is connected to an output signal line. The low voltage source VDR is an example of a constant voltage source.

The photoelectric conversion film 10 uses holes as photoelectric conversion carriers. For example, the photoelectric conversion film 10 has a p-type impurity region, and the p-type impurity region is connected to the FD 20. The photoelectric conversion film 10 is formed using, for example, a quantum dot ("Qdot") film, a compound semiconductor such as InGaAs, or an organic compound. The photoelectric conversion film 10 converts the input light and outputs the holes generated to the FD 20.

The FD 20 is connected to the source of the reset transistor 11 and the gate of the amplifier transistor 12 by a path opposite to the side connected to the photoelectric conversion film 10. The FD 20 accumulates holes outputted from the photoelectric conversion film 10. The FD 20 applies a voltage generated by the accumulated holes to the gate of the amplifier transistor 12. The FD 20 turns on the amplifier transistor 12 by applying a voltage equal to or higher than a threshold voltage to the gate of the amplifier transistor 12. When the reset transistor 11 is turned on, the charge accumulated in the FD 20 is discharged to the low voltage source VDR, and the FD 20 is reset. The FD 20 is an example of a second charge holding unit.

The reset transistor 11 is a P-type MOS transistor ("PMOS"). As described above, the reset transistor 11 has a source connected to the path connected to the FD 20 and a drain connected to the low voltage source VDR. Further, a gate of the reset transistor 11 is connected to a reset signal line. The reset transistor 11 is turned on when a voltage equal to or lower than the threshold voltage is applied to the gate. In addition, the reset transistor 11 is turned off when a voltage larger than the threshold voltage is applied to the gate. When the reset transistor 11 is turned on, the charge accumulated in the FD 20 is discharged to the low voltage source VDR to reset the FD 20. Here, the potential of the barrier formed by the reset transistor 11 is set higher than the potential of the inter-pixel barrier formed between the FDs 20. The reset transistor 11 is an example of a predetermined transistor.

Here, the pixels 120 having the pixel circuit 1 are arranged in a two-dimensional lattice shape in a matrix as illustrated in Fig. 2. When the pixels 120 are arranged in a planar shape, the FDs 20 of the pixel circuits 1 included in the pixels are arranged so as to be adjacent to each other. Between adjacent FDs 20, there is an inter-pixel barrier to prevent the charge accumulated in the FD 20 from flowing into the adjacent FD 20. However, when the number of holes accumulated in the FD 20 exceeds the inter-pixel barrier, the holes become saturated and flow into the adjacent FD 20. When the charge flows into the adjacent FD 20 on the FD 20 side, that is, on the photoelectric conversion film 10 side, blooming occurs.

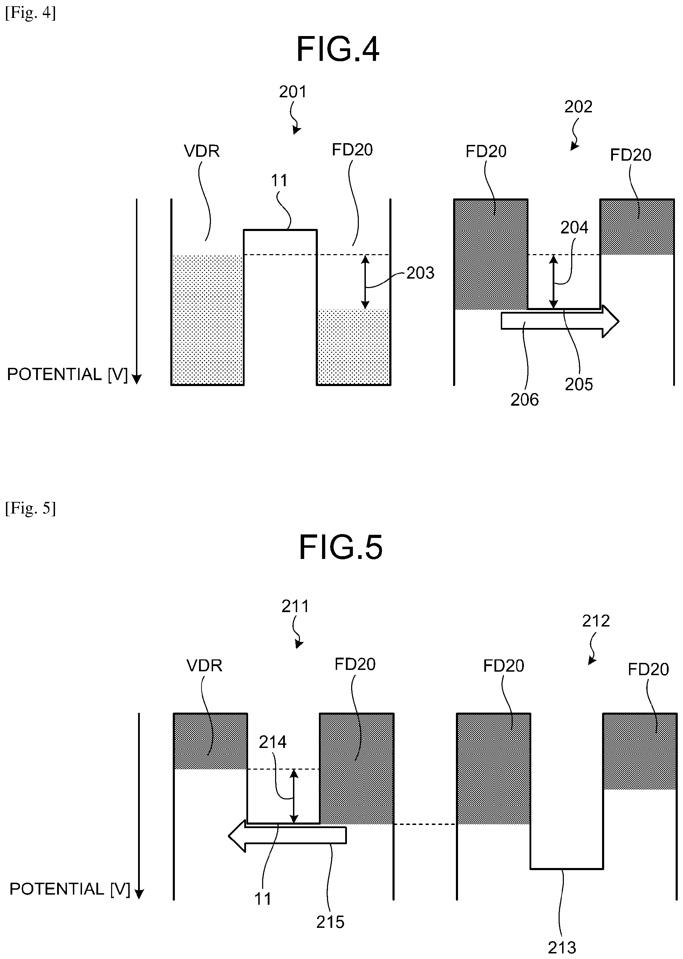

Fig. 4 is a diagram for describing the inflow of holes into the adjacent pixels. Fig. 4 illustrates that the potential is lowered downwardly when viewed from the front. For example, when the reset transistor 11 is an N-type MOS transistor ("NMOS"), the potential at the source of the reset transistor 11 is reduced by the hole injection amount 203 as indicated by the potential 201 on the transistor side. In this case, since the potential moves in the opposite direction to the barrier formed by the reset transistor 11, no overflow occurs. On the other hand, since holes are accumulated in the FD 20, an inter-pixel barrier 205 having a potential lower than the potential in the reset state of the FD 20 is provided between the FDs 20 to suppress an overflow as indicated by the potential 202 on the photoelectric conversion film side. In this case, as indicated by the potential 202 on the photoelectric conversion film side, when the hole injection amount 204 increases to exceed the inter-pixel barrier 205 and overflow 206 occurs, charge flows into the adjacent FD 20.

Thus, in the pixel circuit 1 according to the present embodiment, the reset transistor 11 is a PMOS. Fig. 5 is a diagram for describing the formation of a charge overflow path in the first embodiment. Since the reset transistor 11 according to the present embodiment is a PMOS, when holes are accumulated in the drain of the barrier, charges are accumulated in the direction approaching the upper limit of the barrier formed by the reset transistor 11. In parallel with this, charges are accumulated in the direction approaching the upper limit of the inter-pixel barrier 205 between the FDs 20. Here, the potential of the barrier formed by the reset transistor 11 according to the present embodiment is set higher than the potential of the inter-pixel barrier 213. Therefore, even when the potential corresponding to the hole injection amount 214 drops, the hole does not exceed the inter-pixel barrier 213 as indicated by the potential 212 on the photoelectric conversion film side. On the other hand, when the potential corresponding to the hole injection amount 214 is lowered, an overflow path 215 is formed beyond the barrier formed by the reset transistor 11 as indicated by the potential 211 on the transistor side. Thus, the inflow of charges into the adjacent FD 20 can be suppressed.

Referring back to Fig. 3, the pixel circuit 1 will be described. The amplifier transistor 12 is an NMOS. As described above, the amplifier transistor 12 has a gate connected to the path connected to the FD 20, a source connected to the voltage source VDD, and a drain connected to the source of the select transistor 13. The amplifier transistor 12 is turned on when a voltage equal to or higher than a threshold voltage is applied to the gate by the charge outputted from the FD 20. In addition, the amplifier transistor 12 is turned off when a voltage smaller than the threshold voltage is applied to the gate. When the amplifier transistor 12 is turned on, the amplifier transistor outputs the current inputted from the voltage source VDD to the select transistor 13. In other words, the amplifier transistor 12 outputs a signal based on the charge held in the FD 20 to the select transistor 13.

The select transistor 13 is an NMOS. As described above, the select transistor 13 has a source connected to the drain of the amplifier transistor 12 and a drain connected to the output signal line. Further, a gate of the select transistor 13 is connected to a select signal line. Since the select transistor 13 is an NMOS, the select transistor is turned on when a voltage equal to or higher than a threshold voltage is applied to the gate. In addition, the select transistor 13 is turned off when a voltage smaller than the threshold voltage is applied to the gate. When the select transistor 13 is turned on, the select transistor outputs the signal outputted from the amplifier transistor 12 to the output signal line as a pixel signal. In other words, the select transistor 13 controls selection of pixels at the time of reading out by determining whether to output pixel signals from the pixel circuit 1.

### Operation of Pixel Circuit according to First Embodiment

The flow of pixel signal generation in the pixel circuit 1 of Fig. 3 will now be described. First, the reset transistor 11 is electrically conductive to reset the FD 20. Then, the reset transistor 11 is turned off. Thus, the charges generated in the photoelectric conversion film 10 are transferred to and held by the FD 20.

When the potential of the FD 20 is lower than the potential of the barrier generated by the reset transistor 11 in a state where holes are accumulated in the FD 20, an overflow path is formed through the reset transistor 11, and holes are discharged from the FD 20 to the low voltage source VDR. Thus, an overflow between the FDs 20 due to saturation of the FD 20 is avoided.

The amplifier transistor 12 generates a pixel signal corresponding to the charge held in the FD 20. Then, the select transistor 13 being electrically conductive allows the pixel signal generated by the amplifier transistor 12 to be outputted to the output signal line. The operation from the reset of the FD 20 to the output of the pixel signal is sequentially performed for each pixel circuit 1 arranged in the pixel array. The output of the pixel signals is processed in all the pixel circuits 1 of the pixel array to generate a frame which is a pixel signal for one screen.

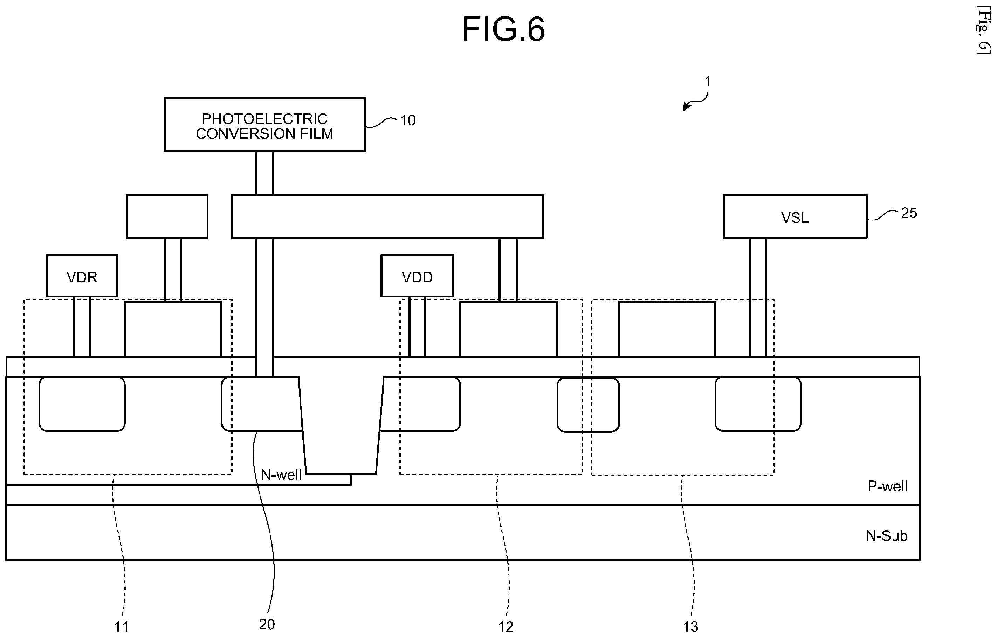

Fig. 6 is a cross-sectional view of the pixel circuit according to the first embodiment. The flow of charges will be described again with reference to Fig. 6. As illustrated in Fig. 6, the pixel circuit 1 has a P-well arranged on an N-Sub which is an N-type semiconductor substrate, and an N-well arranged in a part of the P-well. The reset transistor 11 has a source and a drain arranged on the N-well, which are N-type diffusion regions. Further, the amplifier transistor 12 and the select transistor 13 has a source and a drain arranged on the P-well, which are P-type diffusion regions.

When the reset transistor 11 is turned on, the holes accumulated in the FD 20 are outputted to the low voltage source VDR, and the FD 20 is reset. In addition, the photoelectric conversion film 10 into which light is incident generates a photoelectric conversion carrier of a hole. The holes generated by the photoelectric conversion film 10 are then accumulated and held in the FD 20. The charge of the holes accumulated in the FD 20 applies a voltage to the gate of the amplifier transistor 12. In response to the voltage outputted from the FD 20 and applied to the gate, the amplifier transistor 12 generates a pixel signal by passing the current outputted from the voltage source VDD. When OFF, the select transistor 13 does not output the pixel signal generated by the amplifier transistor 12 to the output signal line. On the other hand, when ON, the select transistor 13 outputs the pixel signal generated by the amplifier transistor 12 to the output signal line. Thus, the pixel signal is transmitted to the vertical signal line ("VSL") 25.

### Operation and Effect

As described above, the pixel circuit 1 according to the present embodiment has a three-transistor configuration, has a photoelectric conversion film 10 using holes as photoelectric conversion carriers, and has a PMOS as the reset transistor 11 for resetting the FD 20 arranged between the FD 20 and the low voltage source VDR. Such a configuration allows the pixel circuit 1 according to the present embodiment to form an overflow path between the FD 20 and the low voltage source VDR and discharge the holes to the low voltage source VDR before the FD 20 becomes saturated and the overflow of holes occurs between the adjacent FDs 20. Thus, the pixel circuit 1 according to the present embodiment can avoid saturation of the FD 20 and suppress overflow between the FDs 20. The suppression of the overflow between the FDs 20 enables the pixel circuit 1 according to the present embodiment to reduce the occurrence of blooming in the adjacent pixels 120.

### 2. Second Embodiment

### Configuration of Pixel Circuit according to Second Embodiment

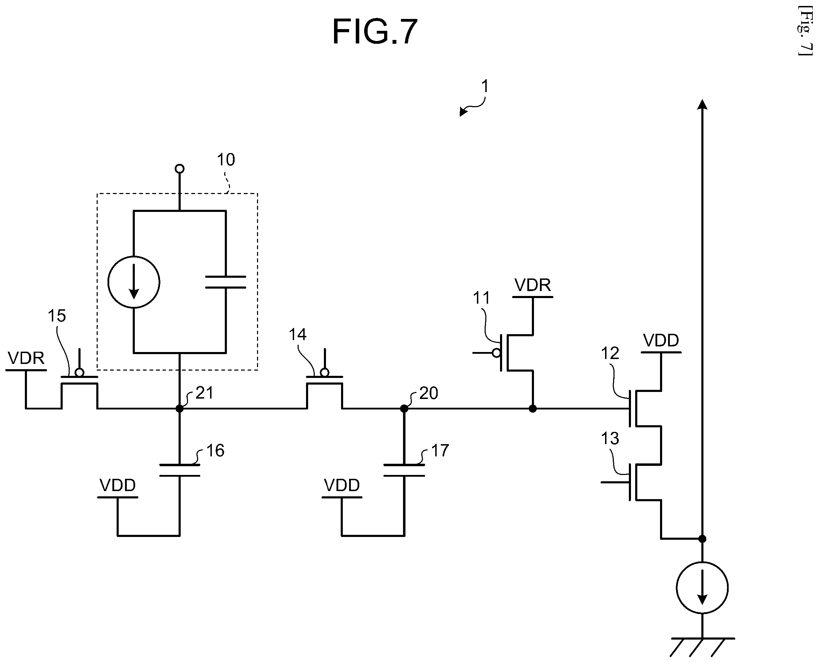

Fig. 7 is a circuit diagram of a pixel circuit according to a second embodiment. The pixel circuit 1 according to the present embodiment includes a photoelectric conversion film 10, a reset transistor 11, an amplifier transistor 12, a select transistor 13, a transfer gate ("TRG") transistor 14, and a discharge overflow gate ("OFG") transistor 15. Further, the pixel circuit 1 according to the present embodiment has capacitors 16 and 17. The pixel circuit 1 according to the present embodiment is a pixel circuit of an FD holding type global shutter ("GS"). Here, the portions having the same reference signs as those in the first embodiment have the same functions as those in the first embodiment unless otherwise explained, and the description thereof may be omitted. Here, the pixel circuit in which the reset transistor 11, the amplifier transistor 12, the select transistor 13, the trigger transistor 14, the discharge transistor 15, and the capacitors 16 and 17 are combined is an example of a readout circuit.

The output terminal of the photoelectric conversion film 10 according to the present embodiment is connected to a sense node ("SN") 21 which is a diffusion layer connected to a source of the discharge transistor 15, a source of the trigger transistor 14, and the capacitor 16. The SN 21 is an example of a first charge holding unit.

The discharge transistor 15 has a source connected to the output terminal of the photoelectric conversion film 10 and a drain connected to the low voltage source VDR. The trigger transistor 14 has a source connected to the output terminal of the photoelectric conversion film 10 and a drain connected to the FD 20. The output terminal of the FD 20 is connected to the source of the reset transistor 11, the gate of the amplifier transistor 12, and the capacitor 17. A drain of the reset transistor 11 is connected to a low voltage source VDR. In addition, a drain of the amplifier transistor 12 is connected to the voltage source VDD. Further, a source of the amplifier transistor 12 is connected to a drain of the select transistor 13. A source of the select transistor 13 is connected to an output signal line. The capacitor 16 is connected to the output terminal of the photoelectric conversion film 10. The capacitor 17 is connected to the FD 20.

As described above, the output terminal of the photoelectric conversion film 10 is connected to the source of the discharge transistor 15, the source of the trigger transistor 14, and the capacitor 16. The photoelectric conversion film 10 outputs holes, which are photoelectric conversion carriers, from the output terminal.

The discharge transistor 15 is a PMOS. As described above, the discharge transistor 15 has a source connected to the output terminal of the photoelectric conversion film 10 and a drain connected to the low voltage source VDR. Further, the gate of the discharge transistor 15 is connected to a discharge control signal line. The discharge transistor 15, which is a PMOS, is turned on when a voltage equal to or lower than a threshold voltage is applied to the gate. In addition, the discharge transistor 15 is turned off when a voltage larger than the threshold voltage is applied to the gate. When the discharge transistor 15 is turned on, the charge held in the photoelectric conversion film 10 and the capacitor 16 is discharged to the low voltage source VDR to reset the photoelectric conversion film 10. Here, the potential of the barrier formed by the discharge transistor 15 is set higher than the potential of the inter-pixel barrier formed between the FDs 20. The discharge transistor 15 is an example of a fifth transistor.

The trigger transistor 14 is a PMOS. As described above, the trigger transistor 14 has a source connected to the output terminal of the photoelectric conversion film 10 and a drain connected to the FD20. Further, the gate of the trigger transistor 14 is connected to the transfer signal line. The trigger transistor 14, which is a PMOS, is turned on when a voltage equal to or lower than a threshold voltage is applied to the gate by the signal sent from the transfer signal line. In addition, the trigger transistor 14 is turned off when a voltage larger than the threshold voltage is applied to the gate. When the trigger transistor 14 is turned on, the charge generated by the photoelectric conversion film 10 and accumulated in the capacitor 16 is transferred to the FD 20. Here, the potential of the barrier formed by the trigger transistor 14 is set higher than the potential of the inter-pixel barrier formed between the FDs 20. The trigger transistor 14 is an example of a fourth transistor.

As described above, the potentials of the respective barriers formed by the trigger transistor 14 and the discharge transistor 15 are set higher than the potentials of the inter-pixel barriers formed between the FDs 20. Therefore, when holes are accumulated in the FD 20, an overflow path is formed beyond each barrier formed by each of the trigger transistor 14 and the discharge transistor 15 for the holes accumulated in the FD 20 before the holes flow out to the other FD 20 beyond the inter-pixel barrier. Thus, the charge accumulated in the FD 20 is discharged to the low voltage source VDR through the overflow path formed so as to pass through the trigger transistor 14 and the discharge transistor 15.

The reset transistor 11 is a PMOS as in the first embodiment, and discharges the charges accumulated in the FD 20 and the capacitor 17 to the low voltage source VDR to reset the FD 20 and the capacitor 17. The potential of the barrier formed by the reset transistor 11 is also set higher than the potential of the inter-pixel barrier formed between the FDs 20 as in the first embodiment. Therefore, when holes are accumulated in the FD 20, an overflow path is formed beyond the barrier formed by the reset transistor 11 for the holes accumulated in the FD 20 before the holes flow out to the other FD 20 beyond the inter-pixel barrier. Thus, the charge accumulated in the FD 20 is discharged to the low voltage source VDR through the overflow path formed so as to pass through the reset transistor 11. The reset transistor 11 is an example of a first transistor.

The amplifier transistor 12 and the select transistor 13 are also PMOSs as in the first embodiment. The amplifier transistor 12 and the select transistor 13 have the same functions as those of the first embodiment. The amplifier transistor 12 is an example of a second transistor. The select transistor 13 is an example of a third transistor.

The capacitor 16 is connected to the output terminal of the photoelectric conversion film 10 as described above. Further, the capacitor 16 is connected to the voltage source VDD. The SN 21, to which the source of the trigger transistor 14 and the source of the discharge transistor 15 are connected, and the capacitor 16 accumulate and hold the charges outputted from the photoelectric conversion film 10. The charges held by the SN 21 and the capacitor 16 are discharged to the low voltage source VDR when the discharge transistor 15 is turned on. On the other hand, when the trigger transistor 14 is turned on, the charges held by the SN 21 and the capacitor 16 are transferred to the FD 20.

The capacitor 17 is connected to the FD 20 as described above. Further, the capacitor 17 is connected to the voltage source VDD. The capacitor 17 and the FD 20 accumulate and hold the charge transferred from the capacitor 16. The charges held by the capacitor 17 and the FD 20 are discharged to the low voltage source VDR when the reset transistor 11 is turned on.

### Operation of Pixel Circuit according to Second Embodiment

The flow of pixel signal generation in the pixel circuit 1 of Fig. 7 will now be described. First, the discharge transistor 15 is electrically conductive to reset the photoelectric conversion film 10, the SN 21, and the capacitor 16. Then, when the discharge transistor 15 is turned off, the charges generated in the photoelectric conversion film 10 are accumulated and held in the SN 21 and the capacitor 16. The operations from the resetting of the photoelectric conversion film 10 to the holding of charges in the capacitor 16 are simultaneously performed in all the pixels 120 arranged in the pixel array unit 121. Thus, a global shutter is realized. Note that the period from the reset of the photoelectric conversion film 10 to the holding of the charge on the capacitor 16 corresponds to the exposure period.

Next, the reset transistor 11 is electrically conductive to reset the capacitor 17 and the FD 20. Then, the reset transistor 11 is turned off, and the trigger transistor 14 is turned on. Thus, the charges accumulated in the SN 21 and the capacitor 16 are transferred to the FD 20 and accumulated and held in the capacitor 17 and the FD 20.

Here, when the potential of the FD 20 is lower than the potential of the barrier generated by the discharge transistor 15 in a state where the trigger transistor 14 is turned on and holes are accumulated in the FD 20, an overflow path through the discharge transistor 15 is formed. Then, holes lower than the potential of the barrier generated by the discharge transistor 15 are discharged from the FD 20 to the low voltage source VDR. Thus, an overflow between the FDs 20 due to saturation of the FD 20 is avoided.

When the potential of the FD 20 is lower than the potential of the barrier generated by the trigger transistor 14 in a state where the trigger transistor 14 is off, an overflow path through the trigger transistor 14 is formed. Then, holes lower than the potential of the barrier generated by the trigger transistor 14 are discharged from the FD 20 to the discharge transistor 15 side. Thus, an overflow between the FDs 20 due to saturation of the FD 20 is avoided. Further, when the potential of the discharge transistor 15 on the FD 20 side is lower than the potential of the barrier generated by the discharge transistor 15 through the trigger transistor 14 due to the holes flowing out from the FD 20, an overflow path through the discharge transistor 15 is formed. In this case as well, holes lower than the potential of the barrier generated by the discharge transistor 15 are discharged from the FD 20 to the low voltage source VDR. Thus, an overflow between the FDs 20 due to saturation of the FD 20 is avoided.

The amplifier transistor 12 generates a pixel signal corresponding to the charge held in the FD 20. Then, the select transistor 13 being electrically conductive allows the pixel signal generated by the amplifier transistor 12 to be outputted to the output signal line. The operation from the reset of the FD 20 to the output of the pixel signal is sequentially performed for each pixel circuit 1 arranged in the pixel array. The output of the pixel signals is processed in all the pixel circuits 1 of the pixel array to generate a frame which is a pixel signal for one screen.

In the present embodiment, the capacitors 16 and 17 are provided in the pixel circuit 1 to secure the capacitance of the SN 21 and the FD 20, but the capacitors 16 and 17 may not be provided.

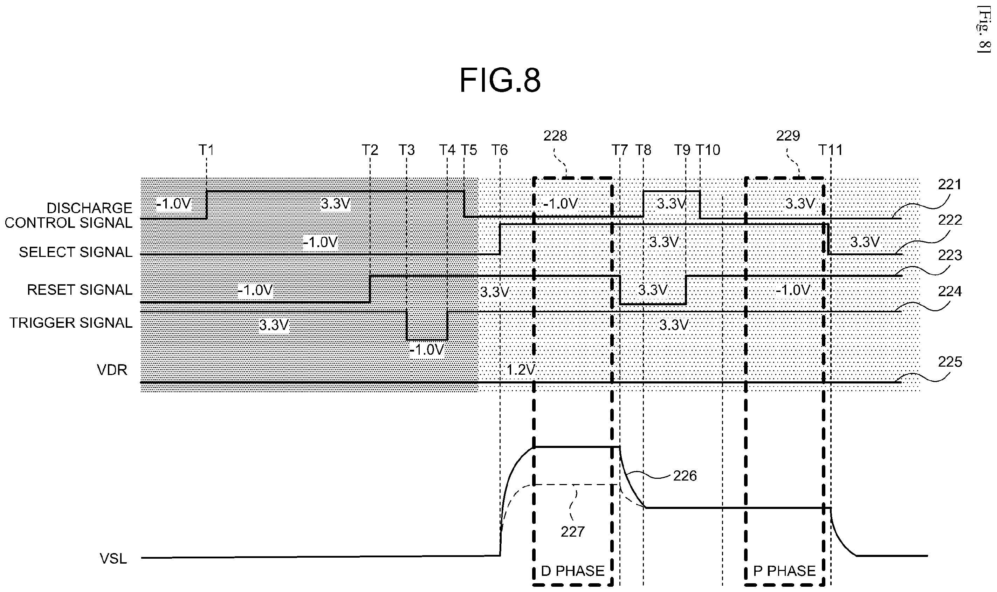

Further, pixel drive by a global shutter will be described with reference to Fig. 8. Fig. 8 is a timing chart of pixel drive by a global shutter. A graph 221 in Fig. 8 represents the potential of the discharge control signal applied to the gate of the discharge transistor 15 and corresponds to the ON/OFF state of the discharge transistor 15. A graph 222 represents the potential of the select signal applied to the gate of the select transistor 13 and corresponds to the ON/OFF state of the select transistor 13. A graph 223 represents the potential of the reset signal applied to the gate of the reset transistor 11 and corresponds to the ON/OFF state of the reset transistor 11. A graph 224 represents the potential of the transfer signal applied to the gate of the trigger transistor 14 and corresponds to the ON/OFF state of the trigger transistor 14. Here, since the reset transistor 11, the trigger transistor 14, and the discharge transistor 15 are PMOSs, these transistors are turned on at a low potential, and turned off at a high potential. In addition, since the select transistor 13 is an NMOS, the select transistor is turned off at a low potential and turned on at a high potential. Further, a graph 225 is a graph representing the voltage of the low voltage source VDR. Here, the case where the voltage of the low voltage source VDR is 1.2 V will be described.

First, up to time T1, the reset transistor 11 and the discharge transistor 15 are turned on, the photoelectric conversion film 10 and the capacitor 16 are reset, and the FD 20 and the capacitor 17 are reset. The discharge transistor 15 is then turned on at time T1, and charges generated in the photoelectric conversion film 10 after time T1 are accumulated in the capacitor 16. Next, at time T2, the reset transistor 11 is turned off, and the reset of the FD 20 and the capacitor 17 is completed. Next, at time T3, the trigger transistor 14 is turned on, and the charge accumulated in the capacitor 16 is transferred to the FD 20 and the capacitor 17. The trigger transistor 14 is then turned off at time T4, and the transfer of the charge accumulated in the capacitor 16 to the FD 20 and the capacitor 17 is completed. Thereafter, when the select transistor 13 is turned on at time T5, the photoelectric conversion film 10 and the capacitor 16 are reset to complete the global shutter.

Next, the select transistor 13 is turned on at time T6, and the pixel signal generated by the amplifier transistor 12 in accordance with the charges accumulated in the FD 20 and the capacitor 17 is outputted to the vertical signal line VSL. A graph 226 represents the potential of the signal read out to the vertical signal line VSL at high illuminance. In addition, a graph 227 represents the potential of the signal read out to the vertical signal line VSL at low illuminance. As illustrated in graphs 226 and 227, the stronger the light applied to the photoelectric conversion film 10, the higher the voltage becomes.

The reset transistor 11 is then turned on at time T7, and the discharge transistor 15 is turned off at time T8. Further, the reset transistor 11 is then turned off at time T9, and the discharge transistor 15 is turned on at time T10. Thus, the potential of the signal read out to the vertical signal line VSL decreases as illustrated in graphs 226 and 227. Such an operation can improve the accuracy of the reference potential. The select transistor 13 is then turned off at time T11, the charges accumulated in the FD 20 and the capacitor 17 are discharged to the low voltage source VDR, the amplifier transistor 12 is turned off, the output of the signal to the vertical signal line VSL is stopped, and the state returns to the original state.

After the select transistor 13 is turned on at time T6, a period 228 from the time when the potential of the vertical signal line VSL is completely raised until the time when the reset transistor 11 is turned on at time T7 and the potential of the vertical signal line VSL is lowered corresponds to the D phase. In addition, a period 229 from the time when the discharge transistor 15 is turned on at time T10 until the select transistor 13 is turned on corresponds to the P phase.

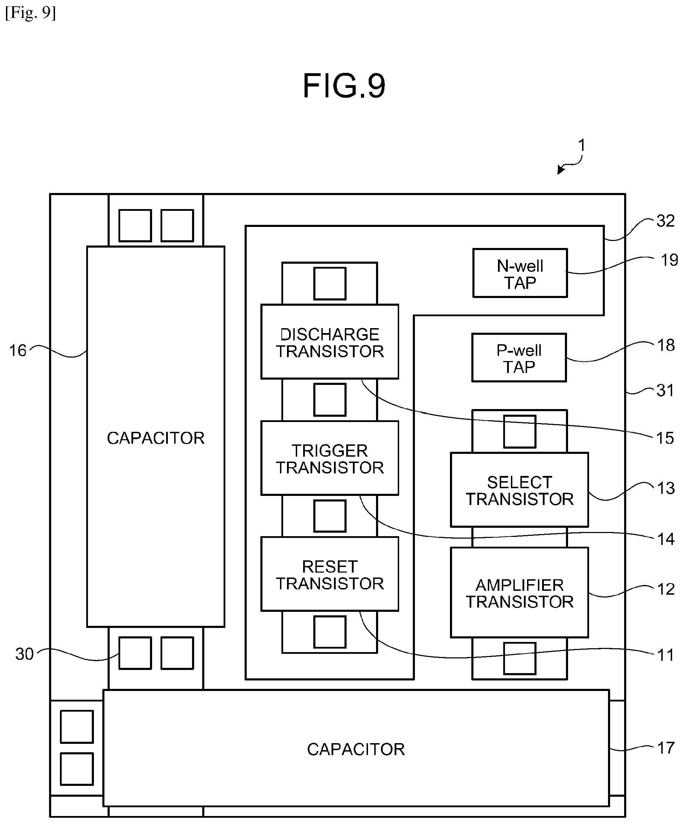

The layout of the pixel circuit 1 will be further described with reference to Fig. 9. Fig. 9 is a diagram illustrating a layout of the pixel circuit according to the second embodiment.

The pixel circuit 1 has a P-well 31 and an N-well 32. The N-well 32 is arranged on the P-well 31. The amplifier transistor 12 and the select transistor 13 are both NMOSs, and are preferably arranged linearly on the P-well 31 in order to share diffusion layers such as the SN 21 and the FD 20, respectively. The reset transistor 11, the trigger transistor 14, and the discharge transistor 15 are PMOSs and are preferably arranged linearly on the N-well 32 in order to share the diffusion layer. The amplifier transistor 12 and the select transistor 13 being linearly arranged, and the reset transistor 11, the trigger transistor 14 and the discharge transistor 15 being linearly arranged are arranged in parallel in the longitudinal direction.

In addition, the capacitor 17 is arranged near the amplifier transistor 12. The FD 20 connected to the amplifier transistor 12 is then connected to the capacitor 17 arranged near the amplifier transistor 12. The select transistor 13 is arranged on the opposite side of the capacitor 17 which holds the amplifier transistor 12 in between. Further, a P-well tap 18 is arranged on the P-well 31. The P-well tap 18 is arranged on the opposite side of the amplifier transistor 12 which holds select transistor 13 in between. The P-well tap 18 is connected to a power supply.

The reset transistor 11 is arranged near the amplifier transistor 12. The reset transistor 11, the trigger transistor 14, and the discharge transistor 15 are arranged in this order. Further, an N-well tap 19 is arranged on the N-well 32. The N-well tap 19 is arranged near the P-well tap 18. The N-well tap 19 is connected to the power supply. The capacitor 16 is arranged near the trigger transistor 14 and the discharge transistor 15. The capacitor 16 is then connected to the SN 21 having no other connecting element on the N-well 32. In addition, contacts 30 are arranged side by side between the capacitors 16 and 17 to shield between the intra-pixel capacitances.

As described above, the pixel circuit 1 according to the present embodiment may not have the capacitors 16 and 17, and in this case, the capacitors 16 and 17 in Fig. 9 may not be arranged.

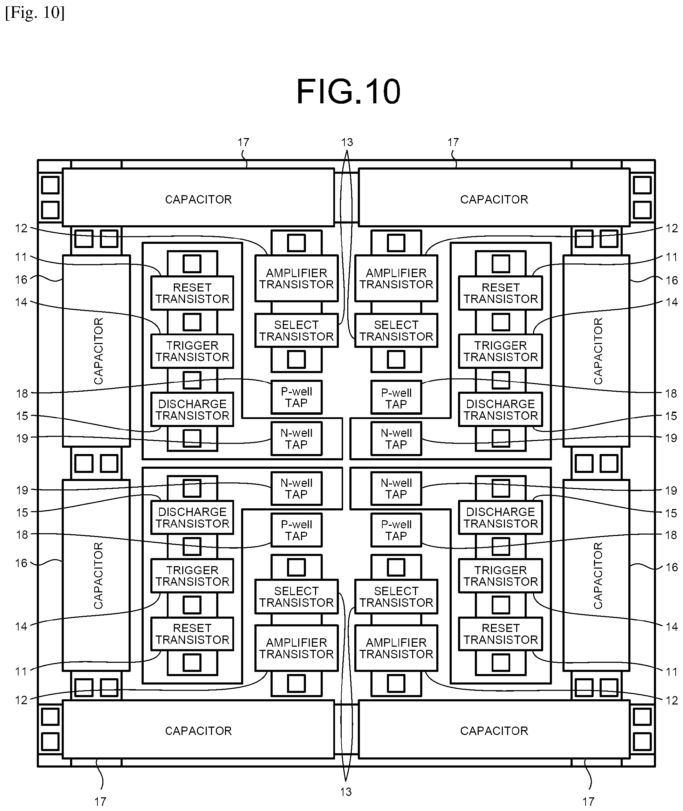

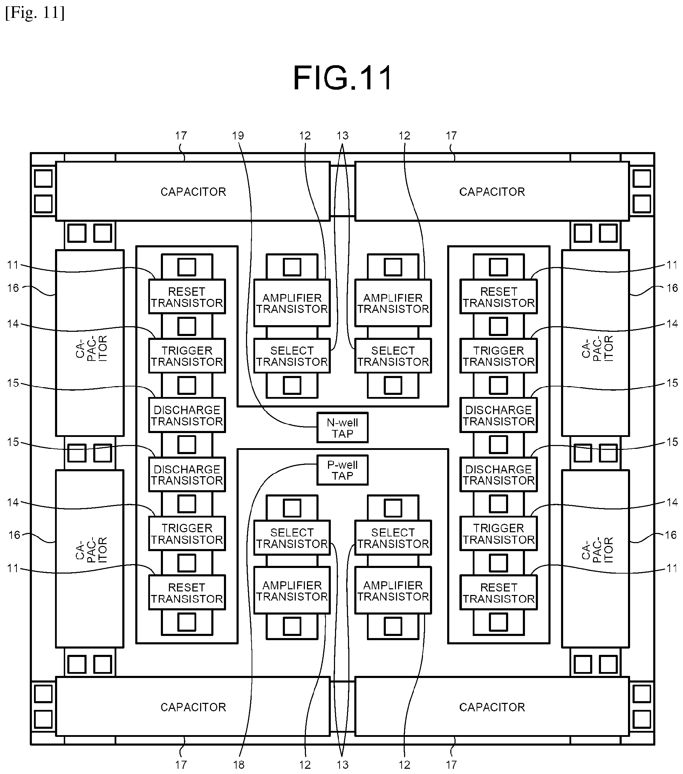

Fig. 10 is a diagram illustrating the arrangement of a plurality of pixel circuits. For example, the pixel circuit 1 having the layout illustrated in Fig. 9 can have a two-by-two mirror arrangement as illustrated in Fig. 10. In addition, Fig. 11 is an arrangement diagram when a P-well tap and an N-well tap are shared. Although four N-well taps 19 are illustrated in Fig. 10, the four N-well taps 19 may be shared as one N-well tap 19 as illustrated in Fig. 11. Such an arrangement can also improve the layout efficiency. However, in the pixel circuit 1 according to the present embodiment having two floating nodes (the FD 20 and the SN 21), since the symmetry of the parasitic capacitance is important, four N-well taps 19 are arranged without intentionally making the four N-well taps shared, as illustrated in Fig. 10.

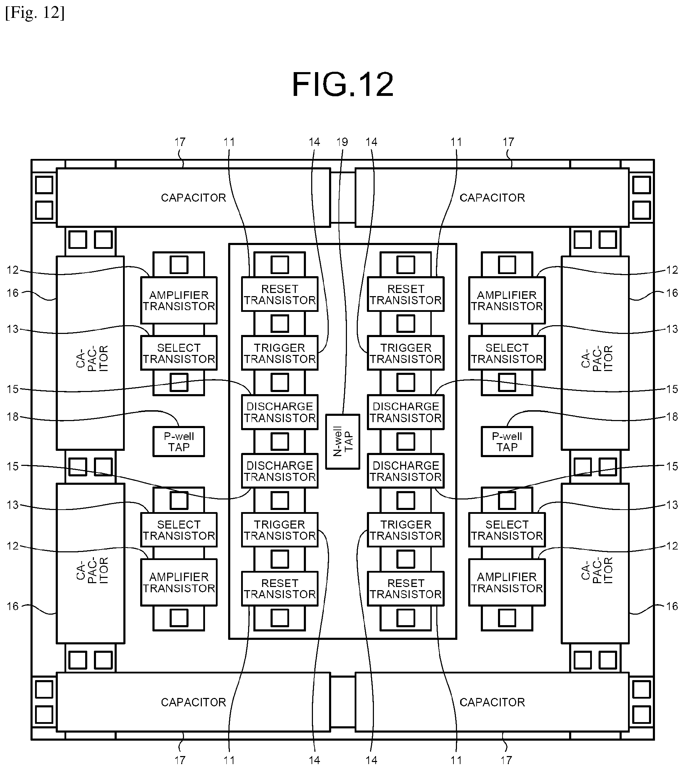

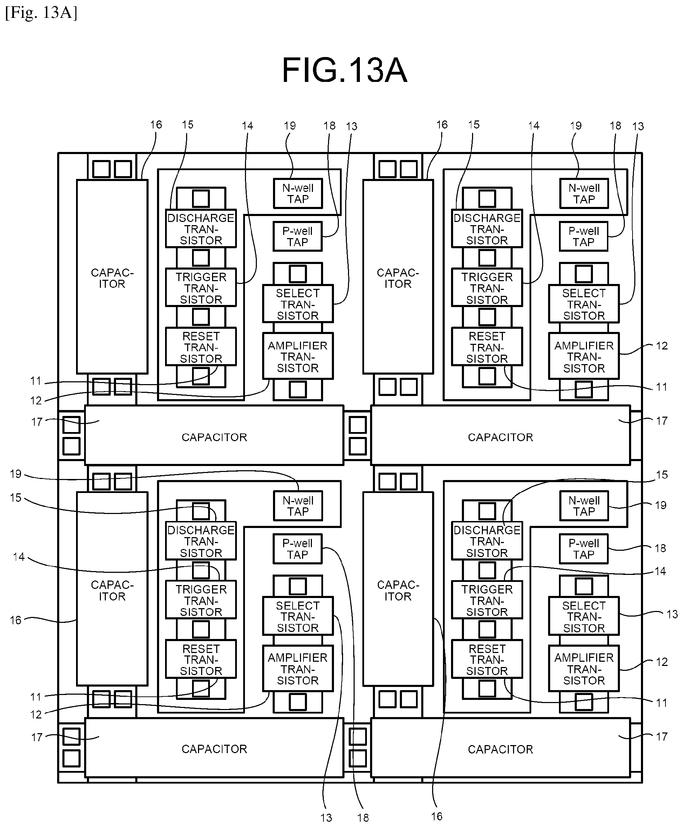

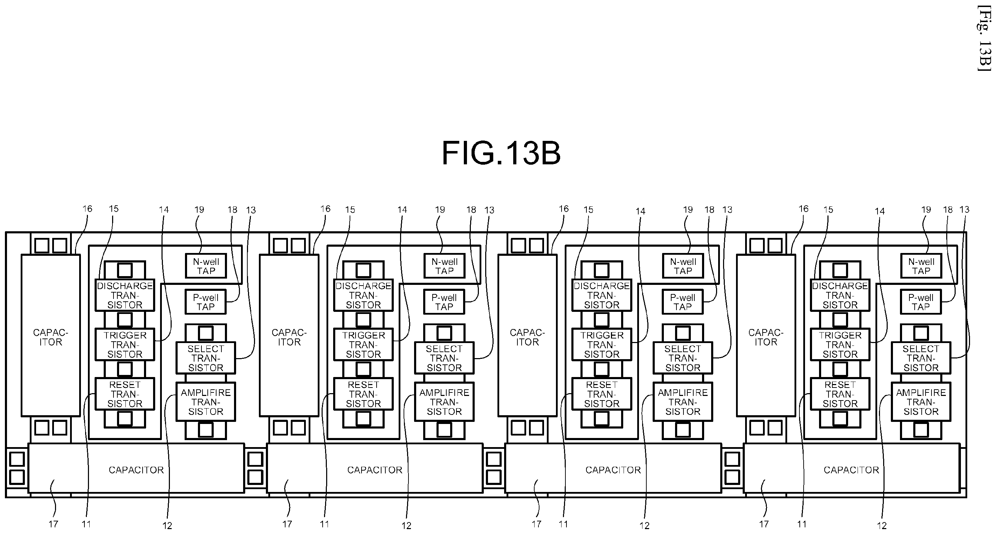

The pixel circuit 1 can also be arranged in a different arrangement from the arrangement illustrated in Fig. 10. Fig. 12 is a diagram illustrating another first example of the arrangement of a plurality of pixel circuits. For example, in Fig. 10, the N-wells taps 19 are arranged in an H-shaped manner when viewed from the front, but as illustrated in Fig. 12, the N-well taps 19 are integrated into one N-well tap being arranged at the center, and the reset transistor 11, the trigger transistor 14, and the discharge transistor 15 being linearly arranged may be arranged linearly in two pairs. In this case, the linearly arranged amplifier transistor 12 and the select transistor 13 are arranged outside the linearly arranged reset transistor 11, the trigger transistor 14, and the discharge transistor 15. In addition, the N-well tap 19 can be shared. Such an arrangement can improve the layout efficiency. Alternatively, as illustrated in Figs. 13A and 13B, the pixel circuits 1 as illustrated in Fig. 9 may be arranged in parallel without changing the direction of the pixel circuit. Fig. 13A is a diagram illustrating another second example of the arrangement of the plurality of pixel circuits. Fig. 13B is a diagram illustrating another third example of the arrangement of the plurality of pixel circuits. Such an arrangement can reduce noise.

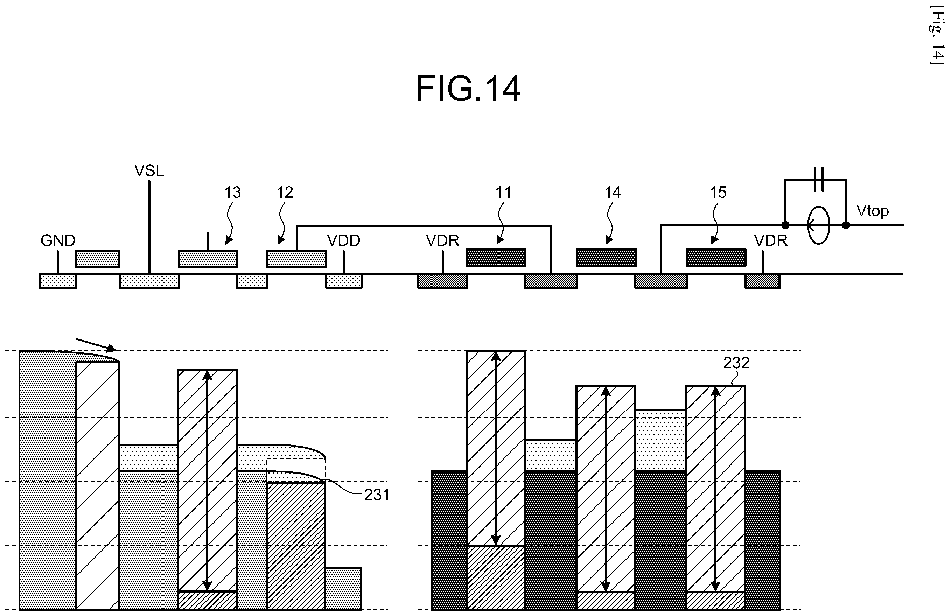

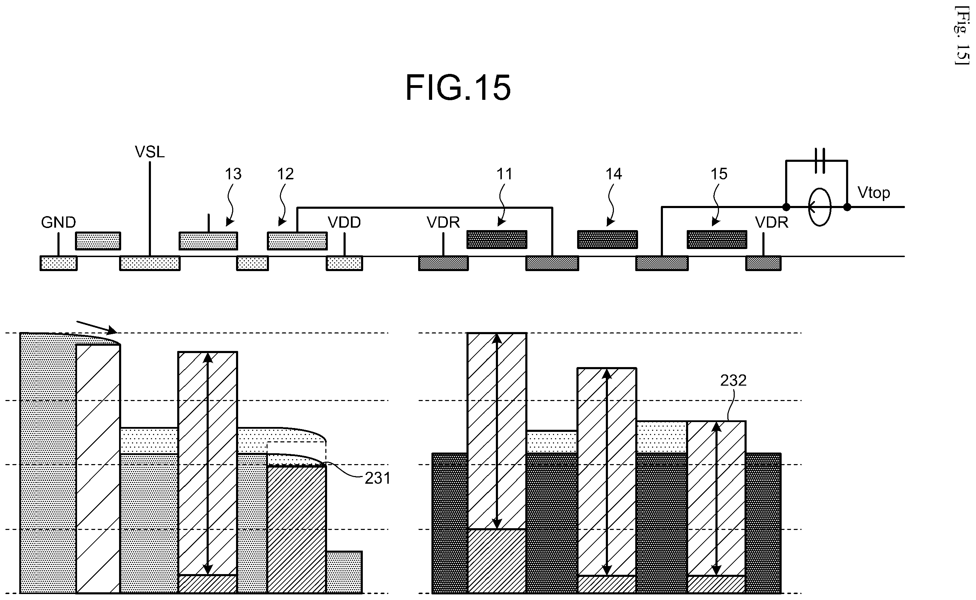

Further, a mode of prioritizing the saturation charge number Qs and a mode of prioritizing suppression of blooming can be separated. Fig. 14 is a diagram illustrating the potential in a mode of prioritizing the saturation charge number Qs. In addition, Fig. 15 is a diagram illustrating the potential in a mode of prioritizing suppression of blooming. Fig. 15 and the lower left graph of Fig. 15 illustrates the state of charge accumulation in the amplifier transistor 12 and the select transistor 13, and the right graph illustrates the state of successful accumulation in the reset transistor 11, the trigger transistor 14, and the discharge transistor 15. The barrier formed by each transistor is adjustable as indicated by an arrow in the lower graph. A ground ("GND") may be a reference voltage and a Vtop may be a top or maximum voltage.

As illustrated in Fig. 14, raising a barrier 232 formed by the discharge transistor 15 can increase the amount of charges accumulated in the FD 20, and thus the saturation charge number Qs increases. However, forming an overflow path becomes difficult, and thus the effect of suppressing blooming decreases. In this case, a barrier 232 of the amplifier transistor 12 is lowered.

On the other hand, as illustrated in Fig. 15, lowering the barrier 232 formed by the discharge transistor 15 makes an overflow path easily formed, and thus the effect of suppressing blooming increases. However, the amount of charges accumulated in the FD 20 decreases, and thus the saturation charge number Qs decreases. In this case, the barrier 232 of the amplifier transistor 12 is lowered.

Thus, adjusting the height of the barrier 232 of the discharge transistor 15 can adjust suppression of blooming and the saturation charge number Qs as a trade-off relationship.

### Operation and Effect

As described above, the pixel circuit 1 according to the present embodiment is an FD holding type GS, and has a photoelectric conversion film 10 using holes as photoelectric conversion carriers. In the pixel circuit 1 according to the present embodiment, a PMOS is used as the reset transistor 11 for resetting the FD 20 arranged between the FD 20 and the low voltage source VDR. In addition, in the pixel circuit 1 according to the present embodiment, a PMOS is used for the discharge transistor 15 for resetting the photoelectric conversion film 10 and the trigger transistor 14 for transferring charges to the FD 20, which are arranged between the FD 20 and the low voltage source VDR. Such a configuration allows the pixel circuit 1 according to the present embodiment to form an overflow path between the FD 20 and the low voltage source VDR and discharge the holes to the low voltage source VDR before the FD 20 becomes saturated and the overflow of holes occurs between the FDs 20. Thus, the pixel circuit 1 according to the present embodiment can avoid saturation of the FD 20 and suppress overflow between the FDs 20. The suppression of the overflow between the FDs 20 enables the pixel circuit 1 according to the present embodiment to reduce the occurrence of blooming in the adjacent pixels 120.

In this case, since the diffusion layer can be shared by the reset transistor 11, the trigger transistor 14, and the discharge transistor 15, and the diffusion layer can be shared by the amplifier transistor 12 and the select transistor 13, the layout efficiency is good. In addition, since the amplifier transistor 12 and the select transistor 13 are NMOSs, the pixel circuit 1 is compatible with a peripheral circuit using an NMOS.

### Modification Example 1 of Second Embodiment

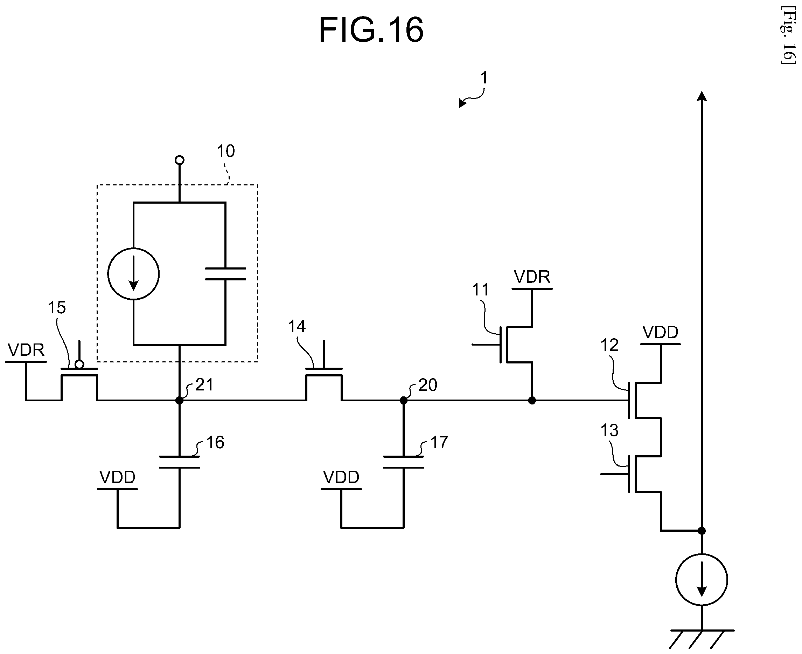

Fig. 16 is a circuit diagram of a pixel circuit according to a modification example 1 of the second embodiment. As illustrated in Fig. 16, the pixel circuit 1 according to the present modification example differs from the second embodiment in that the reset transistor 11 and the trigger transistor 14 are NMOSs.

The reset transistor 11 is an NMOS. The trigger transistor 14 is also an NMOS. In other words, each barrier formed by each of the reset transistor 11 and the trigger transistor 14 is a barrier in the direction opposite to the direction in which the number of holes increases, and an overflow path is not formed even if the number of holes increases in the FD 20.

On the other hand, the discharge transistor 15 is a PMOS. When the discharge transistor 15 is turned on, the charge held in the photoelectric conversion film 10 and the capacitor 16 is discharged to the low voltage source VDR to reset the photoelectric conversion film 10. Here, the potential of the barrier formed by the discharge transistor 15 is set higher than the potential of the inter-pixel barrier formed between the FDs 20.

The charge is accumulated in the FD 20 when the trigger transistor 14 is in an ON state. More specifically, when the discharge transistor 15 is in an OFF state and the trigger transistor 14 is in an ON state, holes are accumulated in the FD 20. Therefore, when holes are accumulated in the FD 20, an overflow path is formed beyond the barrier formed by the discharge transistor 15 before the holes flow out to the other FD 20 beyond the inter-pixel barrier. Thus, the charge accumulated in the FD 20 is discharged to the low voltage source VDR through the trigger transistor 14 and the overflow path formed in the discharge transistor 15.

As described above, the pixel circuit 1 according to the present modification example is a pixel circuit of an FD holding type GS, and has a photoelectric conversion film 10 using holes as photoelectric conversion carriers. In the pixel circuit 1 according to the present modification example, a PMOS is used for the discharge transistor 15 for discharging the charge generated by the photoelectric conversion film 10. The pixel circuit 1 according to the present modification example forms an overflow path between the FD 20 and the low voltage source VDR and discharges the holes to the low voltage source VDR before the FD 20 becomes saturated and the overflow of holes occurs between the FDs 20. Thus, the pixel circuit according to the present modification example can avoid saturation of the FD 20 and suppress overflow between the FDs 20. The suppression of the overflow between the FDs 20 enables the pixel circuit 1 according to the present modification example to reduce the occurrence of blooming in the adjacent pixels.

In this case, since sharing the diffusion layer becomes difficult among the reset transistor 11, the trigger transistor 14, and the discharge transistor 15, the layout efficiency is lower than that of the pixel circuit 1 according to the second embodiment. However, since an overflow path is not formed at a position adjacent to the FD 20, sunspot resistance is improved. In addition, since the amplifier transistor 12 and the select transistor 13 are NMOSs, the pixel circuit 1 according to the present modification example is compatible with a peripheral circuit using an NMOS.

### Modification Example 2 of Second Embodiment

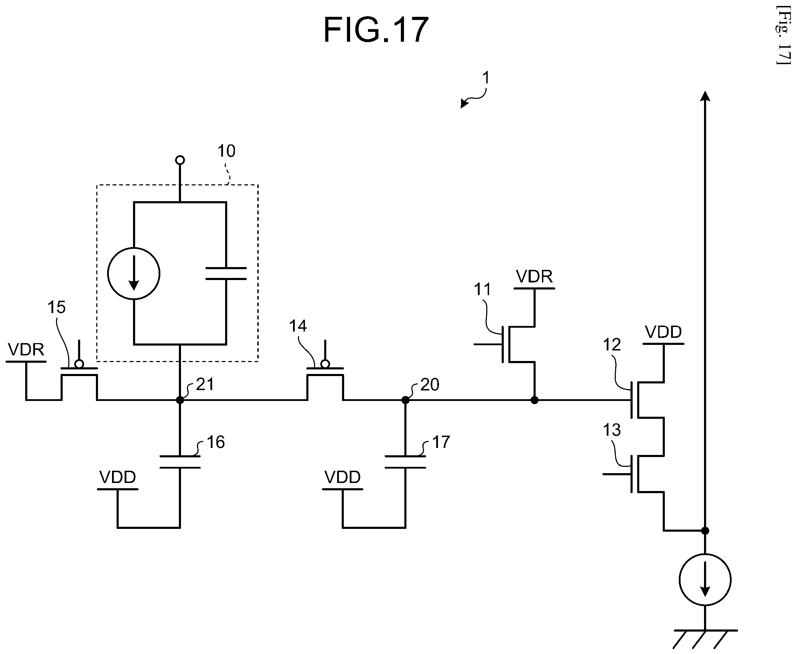

Fig. 17 is a circuit diagram of a pixel circuit according to a modification example 2 of the second embodiment. As illustrated in Fig. 17, the pixel circuit 1 according to the present modification example differs from the second embodiment in that the reset transistor 11 is an NMOS.

The reset transistor 11 is an NMOS. In other word, the barrier formed by the reset transistor 11 is a barrier in the direction opposite to the direction in which the number of holes increases, and an overflow path is not formed even if the number of holes increases in the FD 20.

On the other hand, the trigger transistor 14 and the discharge transistor 15 are PMOSs. The potential of each barrier formed by each of the trigger transistor 14 and the discharge transistor 15 is set higher than the potential of the inter-pixel barrier formed between the FDs 20.

When holes are accumulated in the FD 20, such a configuration allows an overflow path beyond each barrier formed by each of the trigger transistor 14 and the discharge transistor 15 to be formed before the holes flow out to the other FD 20 beyond the inter-pixel barrier. Thus, the charge accumulated in the FD 20 is discharged to the low voltage source VDR through each overflow path formed in each of the trigger transistor 14 and the discharge transistor 15.

As described above, in the pixel circuit 1 according to the present modification example, a PMOS is used for both the discharge transistor 15 for discharging the charge generated by the photoelectric conversion film 10 and the trigger transistor 14 for transferring the charge generated by the photoelectric conversion film 10 to the FD 20. The pixel circuit 1 according to the present modification example forms an overflow path between the FD 20 and the low voltage source VDR and discharges the holes to the low voltage source VDR before the FD 20 becomes saturated and the overflow of holes occurs between the FDs 20. Thus, the pixel circuit 1 according to the present modification example can avoid saturation of the FD 20 and suppress overflow between the FDs 20. The suppression of the overflow between the FDs 20 enables the pixel circuit 1 according to the present embodiment to reduce the occurrence of blooming in the adjacent pixels.

In this case, since sharing the diffusion layer become difficult among the reset transistor 11, the trigger transistor 14, and the discharge transistor 15, the layout efficiency is lower than that of the pixel circuit 1 of the second embodiment. However, since the amplifier transistor 12 and the select transistor 13 are NMOSs, the pixel circuit 1 according to the present modification example is compatible with a peripheral circuit using an NMOS.

### Modification Example 3 of Second Embodiment

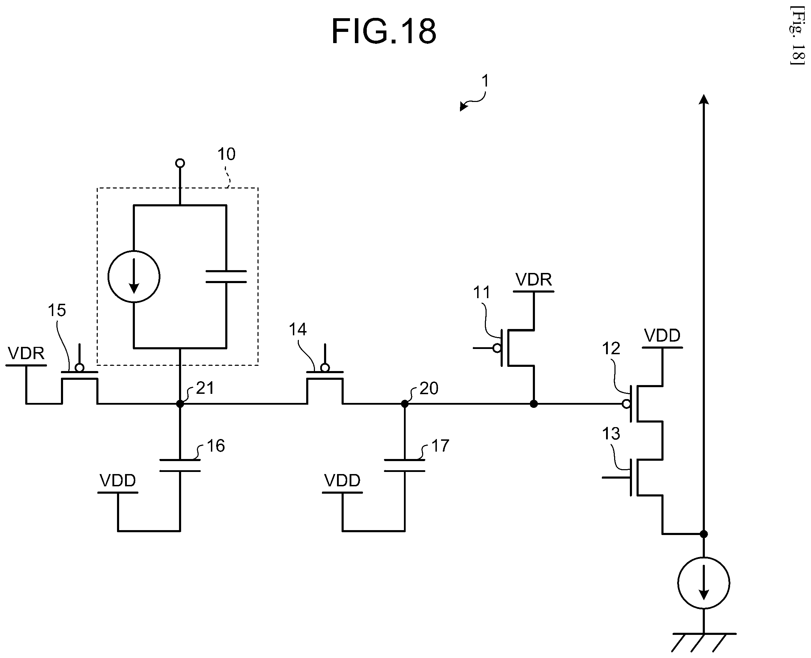

Fig. 18 is a circuit diagram of a pixel circuit according to a modification example 3 of the second embodiment. As illustrated in Fig. 18, the pixel circuit 1 according to the present modification example differs from the second embodiment in that the amplifier transistor 12 is a PMOS.

The amplifier transistor 12 is a PMOS. The amplifier transistor 12 is turned on when the voltage applied to the gate voltage is equal to or lower than the threshold voltage, and turned off when the voltage is higher than the threshold voltage.

When holes are accumulated in the FD 20, the pixel circuit 1 according to the present modification example also allows an overflow path beyond each barrier formed by each of the reset transistor 11, the trigger transistor 14 and the discharge transistor 15 to be formed before the holes flow out to the other FD 20 beyond the inter-pixel barrier. Thus, the charge accumulated in the FD 20 is discharged to the low voltage source VDR through each overflow path formed in each of the reset transistor 11, the trigger transistor 14 and the discharge transistor 15.

As described above, in the pixel circuit 1 according to the present modification example, a PMOS is used for the amplifier transistor 12 for generating a pixel signal. Even such a configuration can form an overflow path between the FD 20 and the low voltage source VDR and discharge holes to the low voltage source VDR, before the FD 20 becomes saturated and the overflow of holes occurs between the adjacent FDs 20. Thus, the overflow between the FDs 20 can be suppressed, and the occurrence of blooming to the adjacent pixels can be reduced.

In this case, since sharing the diffusion layer becomes difficult between the amplifier transistor 12 and the select transistor 13, the layout efficiency is lower than that of the pixel circuit 1 according to the second embodiment. In addition, since the amplifier transistor 12 is a PMOS, a peripheral circuit is also required to cope with a change to a configuration using a PMOS.

### Modification Example 4 of Second Embodiment

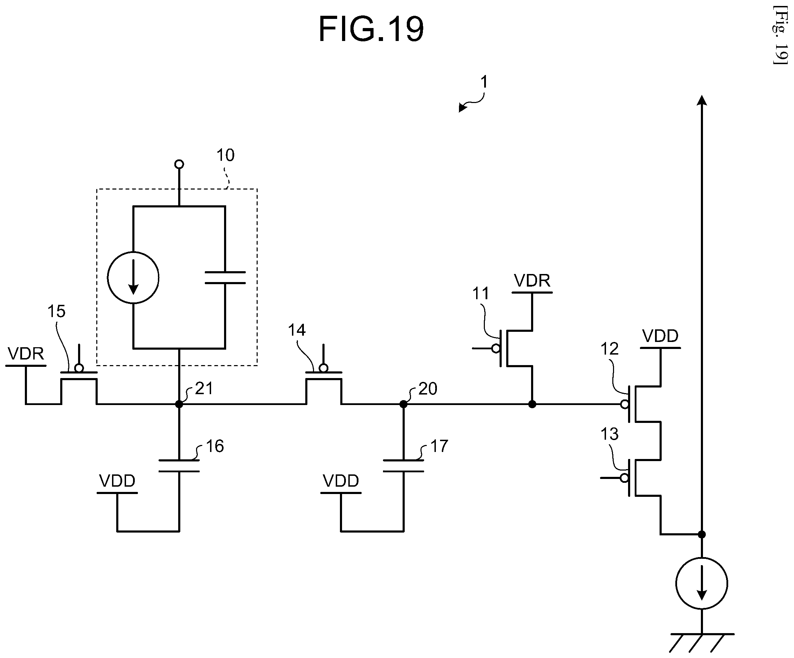

Fig. 19 is a circuit diagram of a pixel circuit according to a modification example 4 of the second embodiment. As illustrated in Fig. 19, the pixel circuit 1 according to the present modification example differs from the second embodiment in that the amplifier transistor 12 and the select transistor 13 are PMOSs.

The amplifier transistor 12 and the select transistor 13 are PMOSs. The amplifier transistor 12 and the select transistor 13 are turned on when the voltage applied to the gate voltage is equal to or lower than the threshold voltage, and turned off when the voltage is higher than the threshold voltage.

The reset transistor 11, the amplifier transistor 12, the select transistor 13, the trigger transistor 14, and the discharge transistor 15 included in the pixel circuit 1 according to the present modification example are all PMOSs. Therefore, the reset transistor 11, the amplifier transistor 12, the select transistor 13, the trigger transistor 14, and the discharge transistor 15 can all be formed by arranging the respective sources and drains on one N-well.

In this case, in the layout of the pixel circuit 1 illustrated in Fig. 9, the reset transistor 11, the amplifier transistor 12, the select transistor 13, the trigger transistor 14 and the discharge transistor 15, and the capacitors 16 and 17 are arranged on the N-well. In this case, if the N-well tap 19 is arranged, the P-well tap 18 may not be arranged. As described above, in the pixel circuit 1 according to the present modification example, since only one N-well tap 19 needs to be arranged, the layout efficiency can be improved as compared with the pixel circuit 1 according to the second embodiment and its modification examples 1 to 3.

When holes are accumulated in the FD 20, the pixel circuit 1 according to the present modification example also allows an overflow path beyond each barrier formed by each of the reset transistor 11, the trigger transistor 14 and the discharge transistor 15 to be formed before the holes flow out to the other FD 20 beyond the inter-pixel barrier. Thus, the charge accumulated in the FD 20 is discharged to the low voltage source VDR through each overflow path in each of the reset transistor 11, the trigger transistor 14 and the discharge transistor 15.

As described above, in the pixel circuit 1 according to the present modification example, a PMOS is used for the amplifier transistor 12 for generating a pixel signal and the select transistor 13 for selecting an output of the pixel signal. Even such a configuration can form an overflow path between the FD 20 and the low voltage source VDR and discharge holes to the low voltage source VDR, before the FD 20 becomes saturated and the overflow of holes occurs between the FDs 20. Thus, the overflow between the FDs 20 can be suppressed, and the occurrence of blooming to the adjacent pixels can be reduced.

In the pixel circuit 1 according to the present modification example, since all the MOS transistors are PMOSs, all the MOS transistors can be formed by arranging the source and drain on the N-Well arranged on the P-type semiconductor substrate. Thus, the manufacturing process of the pixel circuit can be simplified and the manufacturing cost can be reduced.

In this case, since the diffusion layer can be shared among the reset transistor 11, the amplifier transistor 12, the select transistor 13, the trigger transistor 14, and the discharge transistor 15, the layout efficiency is higher than that of the second embodiment. However, since the amplifier transistor 12 and the select transistor 13 are PMOSs, a peripheral circuit is also required to cope with a change to a configuration using a PMOS.

Further, for example, even when the trigger transistor 14 is a PMOS and the reset transistor 11 and the discharge transistor 15 are NMOSs, the effect of reducing the outflow of holes to the adjacent FD 20 can be obtained to some extent.

### 3. Third Embodiment

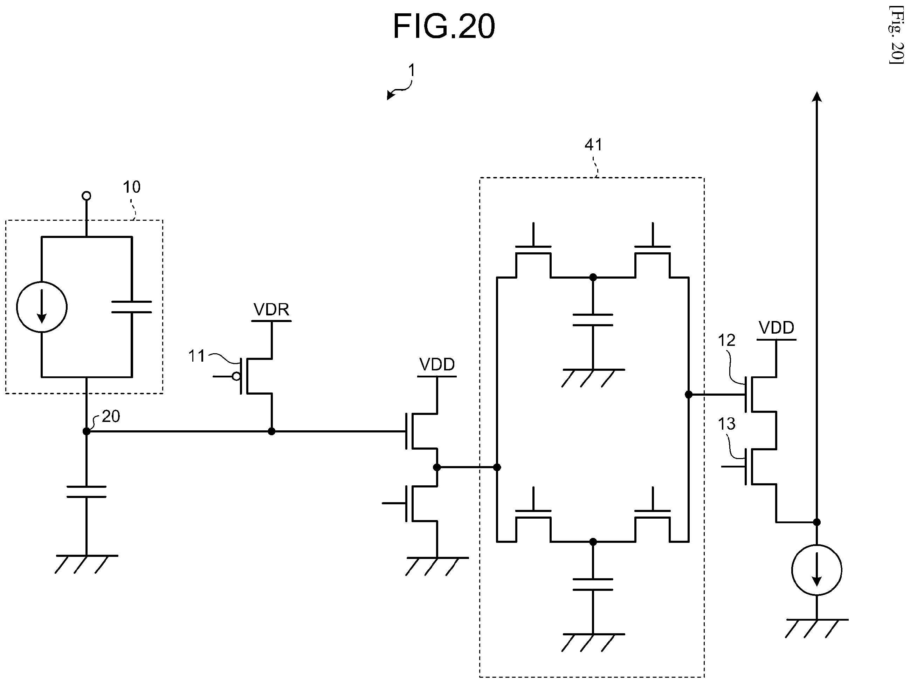

Fig. 20 is a circuit diagram of a pixel circuit according to a third embodiment. The pixel circuit 1 according to the present embodiment differs from the first embodiment in that the pixel circuit includes a voltage domain storage circuit 41 driven by a different power supply system. In the following description, the operation of each portion similar to that in the first embodiment will be omitted.

In the pixel circuit 1 according to the present embodiment, a voltage domain storage circuit 41 driven by a different power supply system is arranged on a path connecting the FD 20 and the gate of the amplifier transistor 12. The charge accumulated in the FD 20 applies a voltage to the gate of the MOS transistor of the storage circuit 41. The storage circuit 41 temporarily holds a pixel signal and applies a voltage according to the charge held in the gate of the amplifier transistor 12 to cause the amplifier transistor 12 to generate the pixel signal.

In this case as well, holes accumulated in the FD 20 may become saturated and flow out to the adjacent FD 20. Therefore, the pixel circuit 1 according to the present embodiment forms an overflow path and discharges the holes to the low voltage source VDR, before the holes flow out to the adjacent FD 20, by using the PMOS, which the potential of the barrier is higher than the potential of the inter-pixel barrier, for the reset transistor 11.

In the case where the storage circuit 41 is incorporated in the pixel circuit 1 as in the present embodiment, the overflow path to the low voltage source VDR is formed to suppress the overflow between the FDs 20 and to reduce the occurrence of blooming to the adjacent pixels.

### 4. Fourth Embodiment

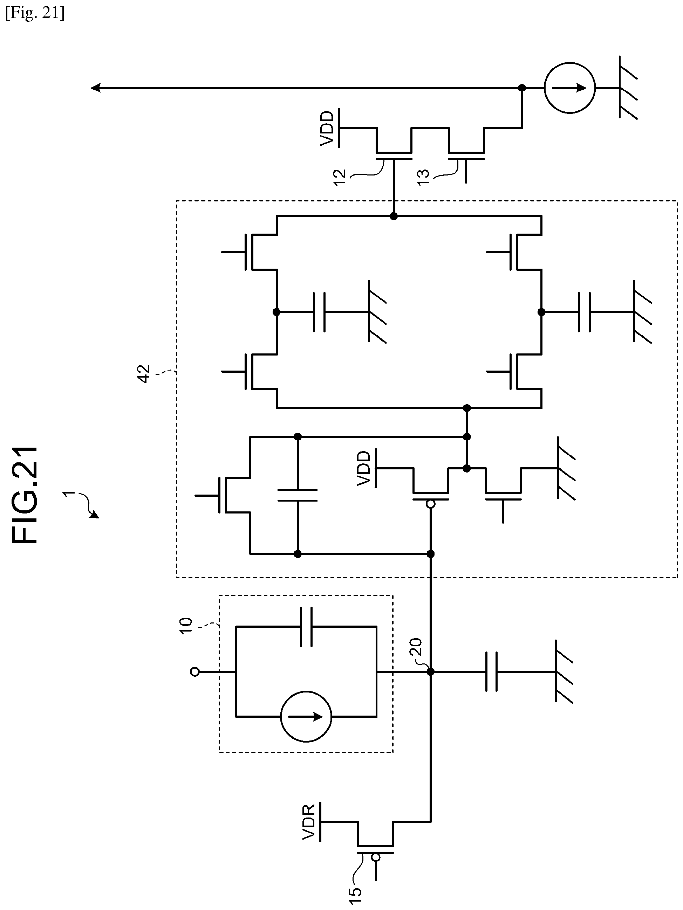

Fig. 21 is a circuit diagram of a pixel circuit according to a fourth embodiment. The pixel circuit 1 according to this embodiment differs from the second embodiment in that the pixel circuit includes a circuit 42 that combines the voltage domain storage circuit 41 illustrated in the third embodiment with a capacitive trans impedance amplifier (CTIA) that is a current integration type readout circuit. In the following description, the operation of each portion similar to that in the second embodiment will be omitted.

In the pixel circuit 1 according to the present embodiment, a MOS transistor for resetting the FD 20 is included in the circuit 42. Further, the pixel circuit 1 does not have the trigger transistor 14 for transferring the charge generated and accumulated by the photoelectric conversion film 10, and the capacitors 16 and 17.

The pixel circuit 1 according to the present embodiment has a circuit 42 including a voltage domain and a CTIA on a path connecting the FD 20 and the gate of the amplifier transistor 12. The charge accumulated in the FD 20 applies a voltage to the gate of the MOS transistor of the circuit 42. The circuit 42 converts the photocurrent into a voltage, temporarily holds the signal converted into the voltage, and then applies the voltage according to the signal held at the gate of the amplifier transistor 12 to cause the amplifier transistor 12 to generate a pixel signal.

In this case as well, holes accumulated in the FD 20 may become saturated and flow out to the adjacent FD 20. Therefore, the pixel circuit 1 according to the present embodiment forms an overflow path and discharges the holes to the low voltage source VDR, before the holes flow out to the adjacent FD 20, by using the PMOS, which the potential of the barrier is higher than the potential of the inter-pixel barrier, for the discharge transistor 15.

Even when the circuit 42 having the voltage domain and the CTIA is incorporated in the pixel circuit 1 as in the present embodiment, the overflow path to the low voltage source VDR is formed to suppress the overflow between the FDs 20 and to reduce the occurrence of blooming to the adjacent pixels.

### 5. Application Examples

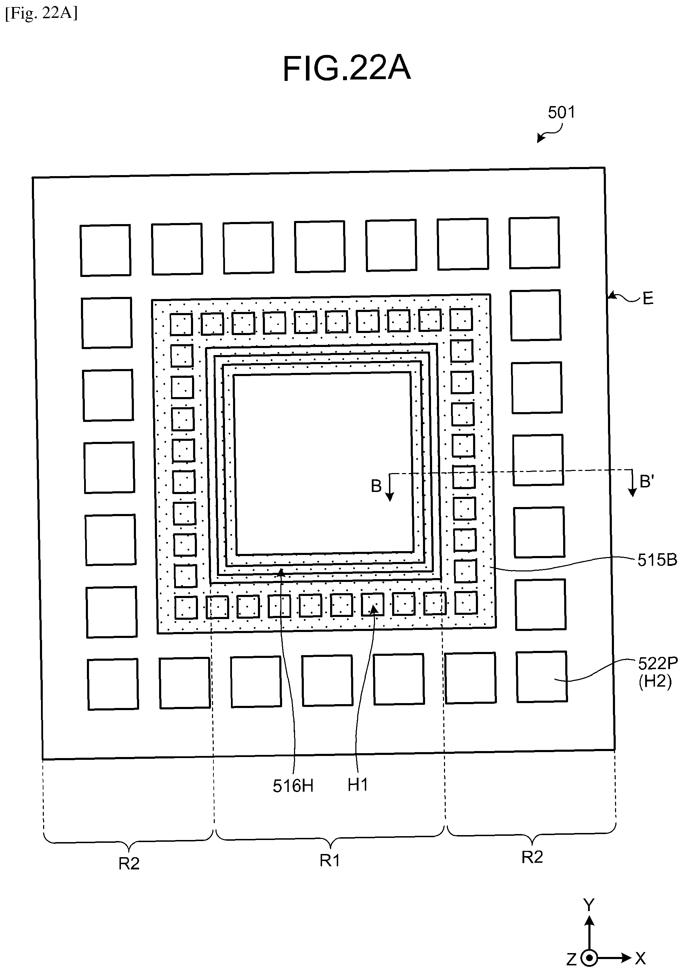

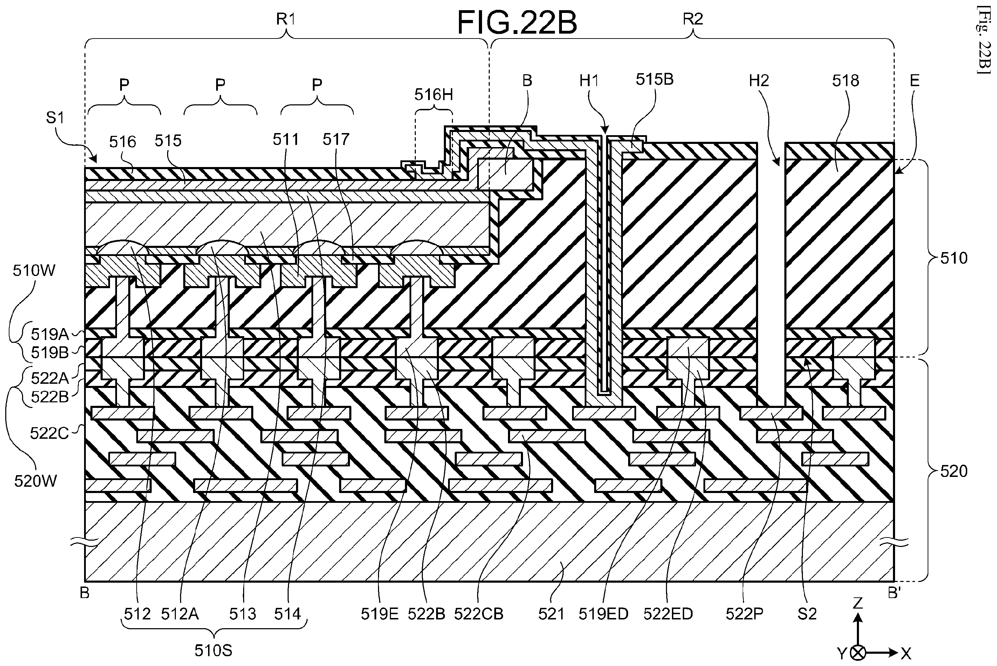

Configuration examples to which the pixel circuit 1 described in each of the above embodiments can be applied will be then described. Fig. 22A is a diagram illustrating a plan configuration of a light receiving element. Fig. 22B is a diagram illustrating a cross-sectional configuration taken along line B-B' of Fig. 22A. For example, each of the pixel circuits 1 described in each embodiment and each modification can be applied to the light receiving element illustrated in Figs. 22A and 22B.

A light receiving element 501 is applied, for example, to an infrared sensor using a compound semiconductor material such as a group III-V semiconductor, and has a photoelectric conversion function for light having a wavelength in a visible region (e.g., 380 nm or more and 780 nm or less) to a short infrared region (e.g., 780 nm or more and 2400 nm or less), for example. The light receiving element 501 is provided with, for example, a plurality of light receiving unit regions P (pixel P) arranged two-dimensionally as illustrated in Fig. 22B.

The light receiving element 501 is applied, for example, to an infrared sensor using a compound semiconductor material such as a group III-V semiconductor, and has a photoelectric conversion function for light having a wavelength in a visible region (e.g., 380 nm or more and 780 nm or less) to a short infrared region (e.g., 780 nm or more and 2400 nm or less), for example. The light receiving element 501 is provided with, for example, a plurality of light receiving unit regions P (pixel P) arranged two-dimensionally.

The light receiving element 501 has an element region R1 at the center and a peripheral region R2 provided outside the element region R1 and surrounding the element region R1 as illustrated in Fig. 22A. The light receiving element 501 has a conductive film 515B provided from the element region R1 to the peripheral region R2. The conductive film 515B has an opening in a region facing the center of the element region R1.

The light receiving element 501 has a laminated structure of an element substrate 510 and a readout circuit substrate 520. One face of the element substrate 510 is a light incident face (light incident face S1), and a face (the other face) opposite to the light incident face S1 is a bonded face (bonded face S2) with the readout circuit substrate 520.

The element substrate 510 has a wiring layer 510W, a first electrode 511, a semiconductor layer 510S (first semiconductor layer), a second electrode 515, and a passivation film 516 in this order from a position close to the readout circuit substrate 520. The face of the semiconductor layer 510S facing the wiring layer 510W and the end face (side face) are covered with an insulating film 517. The readout circuit substrate 520 is a so-called readout integrated circuit (ROIC), and has a wiring layer 520W and a multilayer wiring layer 522C in contact with the bonded face S2 of the element substrate 510, and a semiconductor substrate 521 facing the element substrate 510 by holding the wiring layer 520W and the multilayer wiring layer 522C in between.

The element substrate 510 has a semiconductor layer 510S in an element region R1. In other words, the region where the semiconductor layer 510S is provided is the element region R1 of the light receiving element 501. In the element region R1, a region (region facing the opening of the conductive film 515B) exposed from the conductive film 515B is a light receiving region. In the element region R1, a region covered with the conductive film 515B is an optical black (OPB) region R1B. The OPB region R1B is provided so as to surround the light receiving region. The OPB region R1B is used to obtain a black level pixel signal. The element substrate 510 has a buried layer 518 together with the insulating film 517 in the peripheral region R2. The peripheral region R2 is provided with through-holes H1 and H2 which penetrate the element substrate 510 and reach the readout circuit substrate 520. In the light receiving element 501, light enters the semiconductor layer 510S from the light incident face S1 of the element substrate 510 through the passivation film 516, the second electrode 515, and a second contact layer 514. The signal charge photoelectrically converted in the semiconductor layer 510S moves through the first electrode 511 and the wiring layer 510W, and is read out by the readout circuit substrate 520. The configuration of each portion will be described below.

The wiring layer 510W is provided across the element region R1 and the peripheral region R2, and has the bonded face S2 with the readout circuit substrate 520. In the light receiving element 501, the bonded face S2 of the element substrate 510 is provided in the element region R1 and the peripheral region R2, and the bonded face S2 of the element region R1 and the bonded face S2 of the peripheral region R2, for example, form the same plane. As will be described below, in the light receiving element 501, the bonded face S2 of the peripheral region R2 is formed by providing the buried layer 518.

The wiring layer 510W has, for example, a contact electrode 519E and a dummy electrode 519ED in interlayer insulating films 519A and 519B. For example, the interlayer insulating film 519B is arranged on the readout circuit substrate 520 side, and the interlayer insulating film 519A is arranged on the first contact layer 512 side, and these interlayer insulating films 519A and 519B are laminated. The interlayer insulating films 519A and 519B are made of, for example, an inorganic insulating material. The inorganic insulating material includes, for example, silicon nitride (SiN), aluminum oxide (Al₂O₃), silicon oxide (SiO₂), and hafnium oxide (HfO₂). The interlayer insulating films 519A and 519B may be formed of the same inorganic insulating material.

The contact electrode 519E is provided, for example, in the element region R1. The contact electrode 519E electrically connects the first electrode 511 and the readout circuit substrate 520 and is provided for each pixel P in the element region R1. Adjacent contact electrodes 519E are electrically separated by the buried layer 518 and the interlayer insulating films 519A and 519B. The contact electrode 519E is formed of, for example, a copper (Cu) pad, and is exposed to the bonded face S2. The dummy electrode 519ED is provided, for example, in the peripheral region R2. The dummy electrode 519ED is connected to a dummy electrode 522ED of the wiring layer 520W to be described below. The provision of the dummy electrode 519ED and the dummy electrode 522ED enables the strength of the peripheral region R2 to be improved. The dummy electrode 519ED is formed in the same process as the contact electrode 519E, for example. The dummy electrode 519ED is formed of, for example, a copper (Cu) pad, and is exposed to the bonded face S2.

The first electrode 511 provided between the contact electrode 519E and the semiconductor layer 510S is an electrode (anode) to which a voltage for reading out a signal charge (a hole or an electron, hereinafter, for convenience, will be described assuming that the signal charge is a hole) generated in a photoelectric conversion layer 513 is supplied, and is provided for each pixel P in the element region R1. The first electrode 511 is provided so as to fill the opening of the insulating film 517 and is in contact with the semiconductor layer 510S (more specifically, a diffusion region 512A described below). The first electrode 511 is larger than, for example, the opening of the insulating film 517, and a part of the first electrode 511 is provided in the buried layer 518. In other words, the upper face (face of the semiconductor layer 510S) of the first electrode 511 is in contact with the diffusion region 512A, and a part of the lower face and the side face of the first electrode 511 are in contact with the buried layer 518. The adjacent first electrodes 511 are electrically separated by the insulating film 517 and the buried layer 518.

The first electrode 511 is made of, for example, any one of titanium (Ti), tungsten (W), titanium nitride (TiN), platinum (Pt), gold (Au), germanium (Ge), palladium (Pd), zinc (Zn), nickel (Ni), and aluminum (Al), or an alloy containing at least one of these elements. The first electrode 511 may be a single film made of such a constituent material or may be a laminated film formed by combining two or more types of the materials. For example, the first electrode 511 is composed of a laminated film of titanium and tungsten. The thickness of the first electrode 511 is, for example, several tens nm to several hundred nm.

The semiconductor layer 510S includes, for example, the first contact layer 512, the photoelectric conversion layer 513, and the second contact layer 514 from a position close to the wiring layer 510W. The first contact layer 512, the photoelectric conversion layer 513, and the second contact layer 514 have the same planar shape, and the end faces of these layers are arranged at the same position in plan view.

The first contact layer 512 is provided in common to all the pixels P, for example, and is arranged between the insulating film 517 and the photoelectric conversion layer 513. The first contact layer 512 electrically separates adjacent pixels P, and the first contact layer 512 is provided with, for example, a plurality of diffusion regions 512A. Dark current can be suppressed by using a compound semiconductor material having a band gap larger than a band gap of the compound semiconductor material constituting the photoelectric conversion layer 513 for the first contact layer 512. For example, n-type InP (indium phosphide) can be used for the first contact layer 512.

The diffusion regions 512A provided in the first contact layer 512 are spaced from each other. The diffusion regions 512A are arranged for each pixel P, and the first electrodes 511 are connected to the respective diffusion regions 512A. The diffusion region 512A is also provided in the OPB region R1B. The diffusion region 512A reads out the signal charge generated in the photoelectric conversion layer 513 for each pixel P, and contains, for example, a p-type impurity. The p-type impurity includes, for example, Zn (zinc). Thus, a pn junction interface is formed between the diffusion region 512A and the first contact layer 512 other than the diffusion region 512A, and adjacent pixels P are electrically separated from each other. The diffusion region 512A is provided in the thickness direction of the first contact layer 512, for example, and is also provided in a part of the thickness direction of the photoelectric conversion layer 513.

The photoelectric conversion layer 513 between the first electrode 511 and the second electrode 515, more specifically, between the first contact layer 512 and the second contact layer 514 is provided, for example, in common to all pixels P. The photoelectric conversion layer 513 absorbs light of a predetermined wavelength to generate a signal charge, and is made of, for example, a compound semiconductor material such as a group III-V semiconductor of an i-type. The compound semiconductor material constituting the photoelectric conversion layer 513 include, for example, indium gallium arsenide (InGaAs), indium arsenide antimonide (InAsSb), indium arsenide (InAs), indium antimonide (InSb), and mercury cadmium tellurium (HgCdTe). The photoelectric conversion layer 513 may be formed of germanium (Ge). In the photoelectric conversion layer 513, for example, photoelectric conversion of light having a wavelength in the visible region to the short infrared region is performed.

The second contact layer 514 is provided in common to all the pixels P, for example. The second contact layer 514 is provided between the photoelectric conversion layer 513 and the second electrode 515 and is in contact with the photoelectric conversion layer and the second electrode. The second contact layer 514 is a region in which charges discharged from the second electrode 515 are transferred, and is made of, for example, a compound semiconductor containing an n-type impurity. For example, n-type InP (indium phosphide) can be used for the second contact layer 514.

The second electrode 515 is provided on the second contact layer 514 (light incident side) so as to be in contact with the second contact layer 514 as an electrode common to each pixel P, for example. The second electrode 515 (cathode) discharges charges that are not used as signal charges of the charges generated in the photoelectric conversion layer 513. For example, when holes are read out from the first electrode 511 as signal charges, electrons can be discharged through the second electrode 515, for example. The second electrode 515 is formed of a conductive film capable of transmitting incident light such as infrared light. For example, ITO (Indium Tin Oxide) or ITiO (In₂O₃-TiO₂) can be used for the second electrode 515. The second electrode 515 may be provided in a lattice shape so as to partition adjacent pixels P, for example. A conductive material having low light transmittance can be used for the second electrode 515.

The passivation film 516 covers the second electrode 515 from the light incident face S1 side. The passivation film 516 may have an antireflection function. The passivation film 516 may be made of, for example, silicon nitride (SiN), aluminum oxide (Al₂O₃), silicon oxide (SiO₂), and tantalum oxide (Ta₂O₃). The passivation film 516 has an opening 516H in the OPB region R1B. The opening 516H is formed, for example, in the shape of a frame surrounding the light receiving region as illustrated in Fig. 22A. The opening 516H may be, for example, a square or circular hole in plan view. The opening 516H of the passivation film 516 electrically connects the conductive film 515B to the second electrode 515.

The insulating film 517 is provided between the first contact layer 512 and the buried layer 518, covers the end face of the first contact layer 512, the end face of the photoelectric conversion layer 513, the end face of the second contact layer 514, and the end face of the second electrode 515, and is in contact with the passivation film 516 in the peripheral region R2. The insulating film 517 includes an oxide such as silicon oxide (SiOₓ) or aluminum oxide (Al₂O₃). The insulating film 517 may be constituted by a laminated structure composed of a plurality of films. The insulating film 517 may be made of a silicon (Si) based insulating material such as silicon oxynitride (SiON), carbon-containing silicon oxide (SiOC), silicon nitride (SiN) and silicon carbide (SiC), for example. The thickness of the insulating film 517 is, for example, several tens nm to several hundred nm.

The conductive film 515B is provided from the OPB region R1B to the through-hole H1 of the peripheral region R2. The conductive film 515B is in contact with the second electrode 515 at the opening 516H of the passivation film 516 provided in the OPB region R1B, and is in contact with the wiring 522CB, described below, of the readout circuit substrate 520 via the through-hole H1. Thus, a voltage is supplied from the readout circuit substrate 520 to the second electrode 515 through the conductive film 515B. The conductive film 515B functions as a voltage supply path to the second electrode 515, functions as a light shielding film, and forms the OPB region R1B. The conductive film 515B is made of, for example, a metal material containing tungsten (W), aluminum (Al), titanium (Ti), molybdenum (Mo), tantalum (Ta), or copper (Cu). A passivation film may be provided on the conductive film 515B.

An adhesive layer B may be provided between the end of the second contact layer 514 and the second electrode 515. As will be described below, the adhesive layer B is used for forming the light receiving element 501 and serves to bond the semiconductor layer 510S to the temporary substrate. The adhesive layer B is made of, for example, tetraethoxysilane (TEOS) or silicon oxide (SiO₂). For example, the adhesive layer B is provided wider than the end face of the semiconductor layer 510S and is covered with the buried layer 518 together with the semiconductor layer 510S. The insulating film 517 is provided between the adhesive layer B and the buried layer 518.

The buried layer 518 fills the step between the temporary substrate and the semiconductor layer 510S in the manufacturing process of the light receiving element 501. Although the details will be described below, in the present embodiment, since the buried layer 518 is formed, the occurrence of the defect in the manufacturing process caused by the step between the semiconductor layer 510S and A temporary substrate 533 can be suppressed.

The buried layer 518 in the peripheral region R2 is provided between the wiring layer 510W and the insulating film 517 and between the wiring layer 510W and the passivation film 516 and has a thickness equal to or greater than the thickness of the semiconductor layer 510S, for example. Here, since the buried layer 518 is provided to surround the semiconductor layer 510S, a region (peripheral region R2) around the semiconductor layer 510S is formed. Thus, the bonded face S2 with the readout circuit substrate 520 can be provided in the peripheral region R2. If the bonded face S2 is formed in the peripheral region R2, the thickness of the buried layer 518 may be reduced, but preferably the buried layer 518 covers the semiconductor layer 510S in the thickness direction and the entire end face of the semiconductor layer 510S is covered with the buried layer 518. Since the buried layer 518 covers the entire end face of the semiconductor layer 510S through the insulating film 517, the infiltration of moisture into the semiconductor layer 510S can be effectively reduced. The buried layer 518 of the element region R1 is provided between the semiconductor layer 510S and the wiring layer 510W so as to cover the first electrode 511.

The surface of the buried layer 518 on the side of the bonded face S2 is planarized, and the wiring layer 510W is provided on the surface of the planarized buried layer 518 in the peripheral region R2. The buried layer 518 may be made of an inorganic insulating material such as silicon oxide (SiOₓ), silicon nitride (SiN), silicon oxynitride (SiON), carbon-containing silicon oxide (SiOC), and silicon carbide (SiC), for example.

In the process of manufacturing the light receiving element 501, after the buried layer 518 is formed, the wiring layer 510W including the interlayer insulating films 519A and 519B and the contact electrode 519E is formed above the buried layer 518. The readout circuit substrate 520 including a wiring layer 520W is laminated to an element substrate 510 including the wiring layer 510W to form the light receiving element 501. At this time, the contact electrode 519E of the wiring layer 510W is connected to the contact electrode 522E of the wiring layer 520W. The contact electrodes 519E and 522E have Cu pads, for example, and are connected to the contact electrodes 519E and 522E by direct bonding of the Cu pads. When the contact electrode 519E is formed by the chemical mechanical polishing (CMP) method, the buried layer 518 arranged below the copper film to be polished is required to have a hardness which can withstand the stress during polishing. Further, in order to directly bond the Cu pads of the contact electrodes 519E and 522E to each other, the element substrate 510 and the readout circuit substrate 520 are required to be formed extremely flat. Therefore, the buried layer 518 arranged below the copper film preferably has a hardness which can withstand the stress during polishing. Specifically, the material of the buried layer 518 is preferably a material having a hardness higher than a material of an encapsulant or an organic material arranged around the die in a typical semiconductor package. The material having such high hardness include, for example, an inorganic insulating material. The buried layer 518 can be formed by depositing the inorganic insulating material by, for example, the chemical vapor deposition (CVD), sputtering or coating.

The buried layer 518 is provided with the through-holes H1 and H2 passing through the buried layer 518. The through-holes H1 and H2, together with the buried layer 518, penetrate the wiring layer 510W and reach the readout circuit substrate 520. The through-holes H1 and H2 have a rectangular planar shape, for example, and each of the plurality of through-holes H1 and H2 is provided to surround the element region R1 as illustrated in Fig. 22A. The through-hole H1 is provided at a position closer to the element region R1 than the through-hole H2, and the side wall and the bottom face of the through-hole H1 are covered with the conductive film 515B. The through-hole H1 connects the second electrode 515 (conductive film 515B) to the wiring 522CB, described below of the readout circuit substrate 520, and is provided through the passivation film 516, the buried layer 518, and the wiring layer 510W.

The through-hole H2 is provided at a position closer to the chip end E than the through-hole H1, for example. The through-hole H2 passes through the passivation film 516, the buried layer 518, and the wiring layer 510W, and reaches the pad electrode 522P, described below, of the readout circuit substrate 520. The light receiving element 501 is electrically connected to the outside through the through-hole H2. The through-holes H1 and H2 may not reach the readout circuit substrate 520. For example, the through-holes H1 and H2 may reach the wiring of the wiring layer 510W, and the wiring may be connected to the wiring 522CB and the pad electrode 522P of the readout circuit substrate 520. The through-holes H1 and H2 may penetrate through the adhesive layer B.

Holes and electrons generated in the photoelectric conversion layer 513 are read out from the first electrode 511 and the second electrode 515. In order to perform the readout operation at a high speed, the distance between the first electrode 511 and the second electrode 515 is preferably a distance sufficient for photoelectric conversion and not a distance spaced apart with each other too much. In other words, the thickness of the element substrate 510 is preferably reduced. For example, the distance between the first electrode 511 and the second electrode 515 or the thickness of the element substrate 510 is 10 µm or less, preferably 7 µm or less, and more preferably 5 µm or less.

The semiconductor substrate 521 of the readout circuit substrate 520 faces the element substrate 510 by holding the wiring layer 520W and the multilayer wiring layer 522C in between. The semiconductor substrate 521 is made of, for example, silicon (Si). A plurality of transistors is provided near the surface (surface of the wiring layer 520W side) of the semiconductor substrate 521. For example, a readout circuit (read out circuit) is configured for each pixel P by using the plurality of transistors. As the readout circuit, the pixel circuit 1 described in each embodiment and each modification example can be used. The wiring layer 520W has, for example, an interlayer insulating film 522A and an interlayer insulating film 522B in this order from the element substrate 510 side, and the interlayer insulating films 522A and 522B are laminated. For example, the contact electrode 522E and the dummy electrode 522ED are provided in the interlayer insulating film 522A. The multilayer wiring layer 522C is provided facing the element substrate 510 by holding the wiring layer 520W in between. For example, the pad electrode 522P and a plurality of the wirings 522CB are provided in the multilayer wiring layer 522C. The interlayer insulating films 522A and 522B are made of, for example, an inorganic insulating material. The inorganic insulating material includes, for example, silicon nitride (SiN), aluminum oxide (Al₂O₃), silicon oxide (SiO₂), and hafnium oxide (HfO₂).

The contact electrode 522E electrically connects the first electrode 511 and the wiring 522CB, and is provided for each pixel P in the element region R1. The contact electrode 522E is in contact with the contact electrode 519E on the bonded face S2 of the element substrate 510. The adjacent contact electrodes 522E are electrically separated by the interlayer insulating film 522A.

The dummy electrode 522ED provided in the peripheral region R2 is in contact with the dummy electrode 519ED on the bonded face S2 of the element substrate 510. The dummy electrode 522ED is formed in the same process as the contact electrode 522E, for example. The contact electrode 522E and the dummy electrode 522ED are formed of, for example, copper (Cu) pads, and are exposed on the surface of the readout circuit substrate 520 facing the element substrate 510. In other words, for example, a CuCu bonding is formed between the contact electrode 519E and the contact electrode 522E, and between the dummy electrode 519ED and the dummy electrode 522ED. Thus, the pixel P can be miniaturized.

The wiring 522CB connected to the contact electrode 519E is connected to a transistor provided near the surface of the semiconductor substrate 521, and the first electrode 511 and the readout circuit are connected for each pixel P. The wiring 522CB connected to the conductive film 515B through the through-hole H1 is connected to a predetermined potential, for example. Thus, one (for example, a hole) of the charges generated in the photoelectric conversion layer 513 is read out from the first electrode 511 to the readout circuit through the contact electrodes 519E and 522E, and the other (for example, an electron) of the charges generated in the photoelectric conversion layer 513 is discharged to a predetermined potential from the second electrode 515 through the conductive film 515B.

The pad electrode 522P provided in the peripheral region R2 electrically connects with the outside. The through-hole H2 passing through the element substrate 510 and reaching the pad electrode 522P is provided near the chip end E of the light receiving element 501, and the light receiving element is electrically connected to the outside through the through-hole H2. The connection is made, for example, by a method such as wire bonding or bump. For example, a predetermined potential may be supplied from an external terminal arranged in the through-hole H2 to the second electrode 515 through the through-hole H2, the wiring 522CB of the readout circuit substrate 520, and the conductive film 515B. As a result of the photoelectric conversion in the photoelectric conversion layer 513, the signal voltage read out from the first electrode 511 may be read out to a readout circuit of the semiconductor substrate 521 through the contact electrodes 519E and 522E and outputted to an external terminal arranged in the through-hole H2 through the readout circuit. The signal voltage may be outputted to an external terminal, for example, through the other circuits included in the readout circuit substrate 520, together with the readout circuit. The other circuits are, for example, a signal processing circuit and an output circuit.

The readout circuit substrate 520 is preferably thicker than the element substrate 510. For example, the readout circuit substrate 520 is preferably thicker than the element substrate 510 by a factor of 2 or more, preferably by a factor of 5 or more, or more preferably by a factor of 10 or more. Alternatively, the thickness of the readout circuit substrate 520 is, for example, 100 µm or more, 150 µm or more, or 200 µm or more. The readout circuit substrate 520 having such a large thickness secures the mechanical strength of the light receiving element 501. Note that the readout circuit substrate 520 may include only one semiconductor substrate 521 for forming a circuit or may further include a substrate such as a support substrate in addition to the semiconductor substrate 521 for forming a circuit.

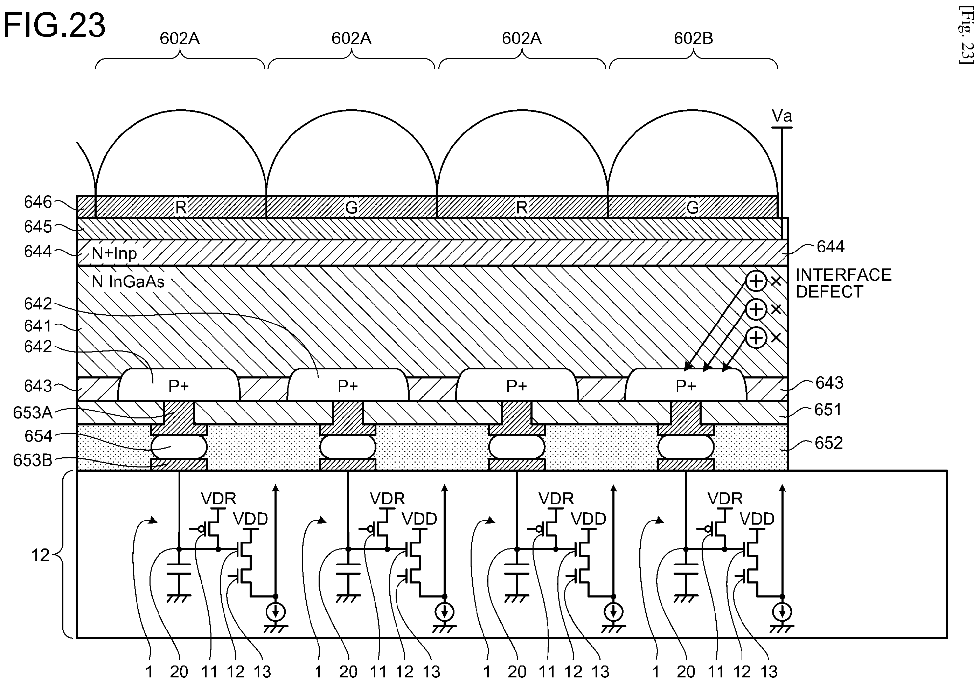

Fig. 23 is a diagram illustrating a cross-sectional configuration of another light receiving element. For example, each of the pixel circuits 1 described in each embodiment and each modification example can be applied to the light receiving element illustrated in Fig. 23.

In Fig. 23, each pixel 602 in the pixel array region is divided into a normal pixel 602A or a charge discharging pixel 602B depending on the difference in the control of the reset transistor, but since both the normal pixel 602A and the charge discharging pixel 602B have the same pixel structure, the pixel structure is simply described as a pixel 602. Note that the charge discharging pixel 602B is arranged on the outermost side of the pixel array region.

A capacitive element, a reset transistor, an amplifier transistor, and a readout circuit for a select transistor in each pixel 602 are formed for each pixel on a semiconductor substrate 612 made of, for example, a single-crystal material such as single-crystal silicon (Si).

On the upper side of the semiconductor substrate 612, which is on the light incident side, an N-type semiconductor thin film 641 is formed on the entire surface of the pixel array region. The N-type semiconductor thin film 641 is made of a compound semiconductor having InGaP, InAlP, InGaAs, InAlAs, or a chalcopyrite structure. A compound semiconductor having a chalcopyrite structure is a material capable of obtaining a high optical absorption coefficient and high sensitivity over a wide wavelength range and is preferably used for the N-type semiconductor thin film 641 for photoelectric conversion. Such a compound semiconductor having a chalcopyrite structure is composed of the elements around group IV elements, such as Cu, Al, Ga, In, S, and Se; examples of these elements include CuGaInS-based mixed crystal, CuAlGaInS-based mixed crystal, and CuAlGaInSSe-based mixed crystal. The pixel circuit 1 described in each embodiment and each modification example can be applied to a readout circuit arranged on the semiconductor substrate 612.

In addition to the above-described compound semiconductor, for example, amorphous silicon (Si), germanium (Ge), a quantum dot photoelectric conversion film, an organic photoelectric conversion film may be used for the material of the N-type semiconductor thin film 641. Here, an InGaAs compound semiconductor can be used for the N-type semiconductor thin film 641.

On the lower side of the N-type semiconductor thin film 641 on the semiconductor substrate 612 side, a high-concentration P-type layer 642 constituting a pixel electrode is formed for each pixel. Between the high-concentration P-type layers 642 formed for each pixel, an N-type layer 643 as a pixel separation region for separating each pixel 602 is formed of a compound semiconductor such as InP, for example. The N-type layer 643 serves not only as a pixel separation region but also as a dark current prevention region.

On the other hand, an N-type layer 644 having a higher concentration than that of the N-type semiconductor thin film 641 is also formed on the upper side of the N-type semiconductor thin film 641 on the light incident side by using a compound semiconductor such as InP used as a pixel separation region. The high-concentration N-type layer 644 functions as a barrier layer for preventing the reverse flow of charges generated in the N-type semiconductor thin film 641. A compound semiconductor such as InGaAs, InP, or InAlAs can be used for the material of the high-concentration N-type layer 644.

An antireflection film 645 is formed on the high-concentration N-type layer 644 as a barrier layer. For example, silicon nitride (SiN), hafnium oxide (HfO₂), aluminum oxide (Al₂O₃), zirconium oxide (ZrO₂), tantalum oxide (Ta₂Ta₅), titanium oxide (TiO₂) can be used for the material of the antireflection film 645.

Either the high-concentration N-type layer 644 or the antireflection film 645 functions as an upper electrode on the upper side among the electrodes sandwiching the N-type semiconductor thin film 641 vertically, and a predetermined voltage Va is applied to the high-concentration N-type layer 644 or the antireflection film 645 as an upper electrode.

A color filter 646 and an on-chip lens 647 are further formed on the antireflection film 645. The color filter 646 is a filter that transmits any one of red (R), green (G), and blue (B) light (wavelength light), and is arranged in, for example, a so-called Bayer array in the pixel array region.

A passivation layer 651 and an insulating layer 652 are formed below the high-concentration P-type layer 642 constituting a pixel electrode and the N-type layer 643 as a pixel separation region. Connection electrodes 653A and 653B and bump electrodes 654 are formed so as to penetrate through the passivation layer 651 and the insulating layer 652. The connection electrodes 653A and 653B and the bump electrode 654 electrically connect the high-concentration P-type layer 642 constituting the pixel electrode to a capacitive element 622 for accumulating charges.

The normal pixel 602A and the charge discharging pixel 602B may be configured as described above and have the same pixel structure. However, the control method of the reset transistor is different between the normal pixel 602A and the charge discharging pixel 602B.

In the normal pixel 602A, the reset transistor is turned on and off based on the reset signal in accordance with, for example, a charge generation period (light receiving period) by the photoelectric conversion unit and a reset period of the potential of the capacitive element before the start of light reception, while in the charge discharging pixel 602B, the reset transistor is always turned on. Thus, the charges generated in the photoelectric conversion unit are discharged to the ground, and a constant voltage Va is always applied to the charge discharging pixel 602B.

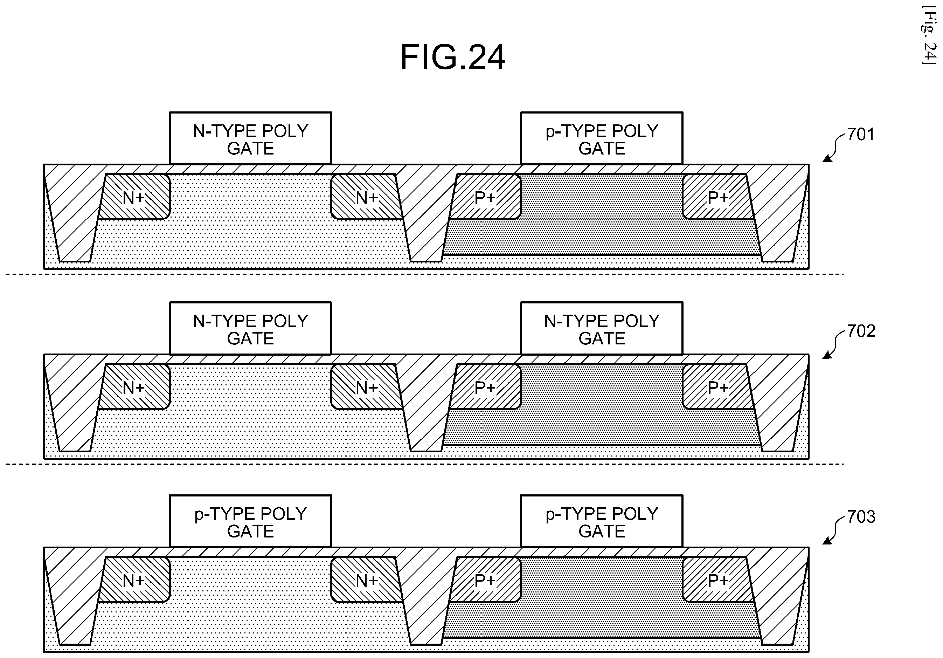

In addition, a poly gate can be shared. Fig. 24 is a diagram for describing the sharing of poly gates in NMOS and PMOS. In each of the above embodiments and modification examples, as illustrated in state 701, an N-type poly gate or a P-type poly gate used as a gate terminal corresponding to each of NMOS and PMOS. However, in the reset transistor 11, the amplifier transistor 12, the select transistor 13, the trigger transistor 14, and the discharge transistor 15, either the N-type poly gate or the P-type poly gate may be used uniformly as in the state 702 or 703. In this case, the gates of the MOS transistors can be collectively generated.

### 6. Application to Mobile Body

The technique according to the present disclosure (the present technique) can be applied to various products. For example, the technique according to the present disclosure may be implemented as devices mounted on any kind of mobile body, such as an automobile, an electric vehicle, a hybrid electric vehicle, a motorcycle, a bicycle, a personal mobility, an airplane, a drone, a ship, or a robot.

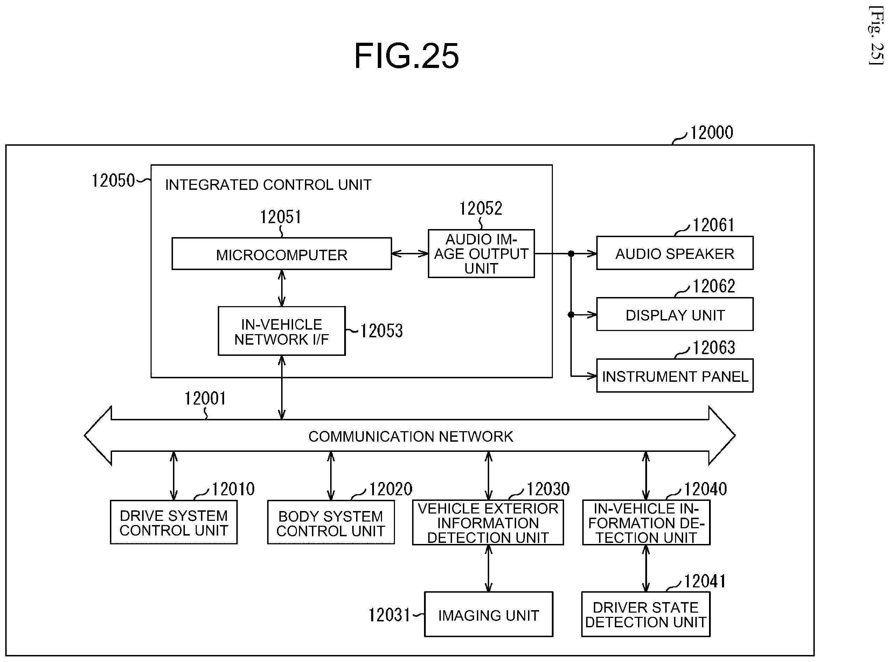

Fig. 25 is a block diagram illustrating a schematic configuration example of a vehicle control system that is an example of a mobile control system to which the technique according to the present disclosure can be applied.

A vehicle control system 12000 includes a plurality of electronic control units connected via a communication network 12001. In the example illustrated in Fig. 25, the vehicle control system 12000 includes a drive system control unit 12010, a body system control unit 12020, a vehicle exterior information detection unit 12030, an in-vehicle information detection unit 12040, and an integrated control unit 12050. In addition, as a functional configuration of the integrated control unit 12050, a microcomputer 12051, an audio image output unit 12052, and an in-vehicle network I/F (interface) 12053 are illustrated.

The drive system control unit 12010 controls the operation of the devices related to the drive system of the vehicle according to various programs. For example, the drive system control unit 12010 functions as a driving force generation device for generating a driving force of a vehicle such as an internal combustion engine or a driving motor, a driving force transmission mechanism for transmitting the driving force to wheels, and a steering mechanism for regulating the steering angle of the vehicle, and a control device such as a braking device for generating a braking force of the vehicle.

The body system control unit 12020 controls the operation of various devices mounted on the vehicle body according to various programs. For example, the body system control unit 12020 functions as a keyless entry system, a smart key system, a power window device, or a control device for various lamps such as headlamps, rear lamps, brake lamps, blinkers, or fog lamps. In this case, the body system control unit 12020 can receive radio waves transmitted from a portable device that substitutes for a key, or signals from various switches. The body system control unit 12020 receives input of these radio waves or signals, and controls a door lock device, a power window device, lamps, and the like of the vehicle.

The vehicle exterior information detection unit 12030 detects information outside the vehicle on which the vehicle control system 12000 is mounted. For example, an imaging unit 12031 is connected to the vehicle exterior information detection unit 12030. The vehicle exterior information detection unit 12030 causes the imaging unit 12031 to capture an image outside the vehicle and receives the captured image. The vehicle exterior information detection unit 12030 may perform object detection processing of a person, a car, an obstacle, a sign, or characters on a road surface, or distance detection processing, in accordance with the received image.

The imaging unit 12031 is an optical sensor that receives light and outputs an electrical signal corresponding to the amount of received light. The imaging unit 12031 can output an electrical signal as an image or as distance measurement information. In addition, the light received by the imaging unit 12031 may be visible light or invisible light such as infrared rays.

The in-vehicle information detection unit 12040 detects vehicle interior information. For example, a driver state detection unit 12041 that detects the state of the driver is connected to the in-vehicle information detection unit 12040. The driver state detection unit 12041 includes, for example, a camera that images the driver, and the in-vehicle information detection unit 12040 may calculate, in accordance with the detected information input from the driver state detection unit 12041, the degree of tiredness or concentration of the driver or determine whether the driver is asleep.

A microcomputer 12051 is able to calculate a control target value of the driving force generation device, the steering mechanism, or the braking device, on the basis of the information inside and outside the vehicle acquired by the vehicle exterior information detection unit 12030 or the in-vehicle information detection unit 12040, to output a control command to the drive system control unit 12010. For example, the microcomputer 12051 can perform cooperative control for the purpose of implementing advanced driver assistance system (ADAS) functions including vehicle collision avoidance or impact mitigation, tracking based on inter-vehicle distance, vehicle speed maintenance, vehicle collision warning, or vehicle lane departure warning.

In addition, the microcomputer 12051 can also perform cooperative control for the purpose of automatic driving to travel the vehicle autonomously without relying on the operation control of the driver by controlling the driving force generation device, the steering mechanism, the braking device, and so on in accordance with the information around the vehicle acquired by the vehicle exterior information detection unit 12030 or the in-vehicle information detection unit 12040.

The microcomputer 12051 can output a control command to the body system control unit 12020 on the basis of the information outside the vehicle acquired by the vehicle exterior information detection unit 12030. For example, the microcomputer 12051 controls the headlamps according to the position of the preceding vehicle or oncoming vehicle detected by the vehicle exterior information detection unit 12030, and performs cooperative control for the purpose of anti-glare, such as switching a high beam to a low beam.

The audio image output unit 12052 transmits an output signal of at least one of audio and image to an output device capable of visually or audibly notifying information to a vehicle occupant or the outside of the vehicle. In the example of Fig. 25, an audio speaker 12061, a display unit 12062, and an instrument panel 12063 are illustrated as output devices. The display unit 12062 may include at least one of an on-board display and a head-up display, for example.

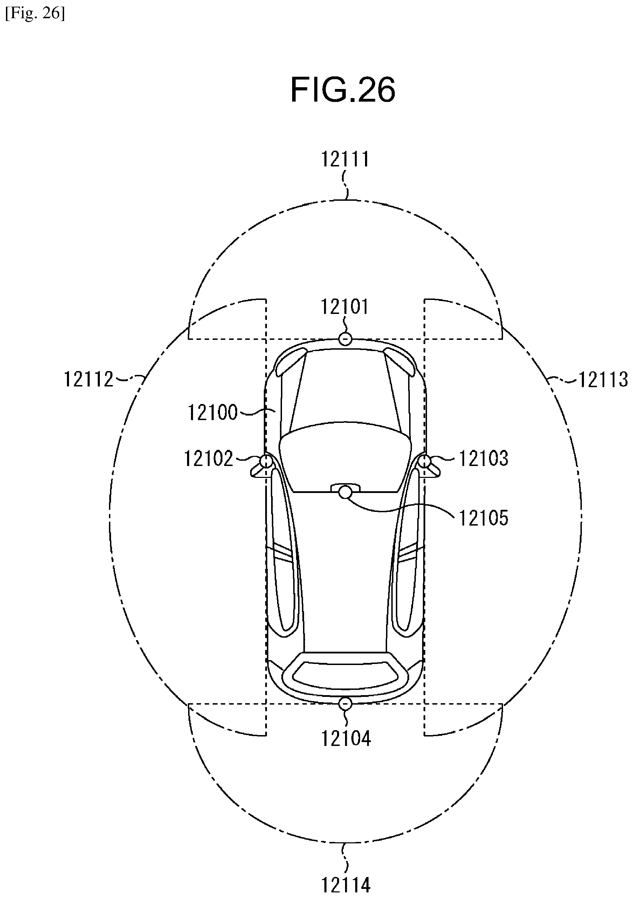

Fig. 26 is a diagram illustrating an example of installation positions of the imaging unit 12031.

In Fig. 26, a vehicle 12100 has imaging units 12101, 12102, 12103, 12104, and 12105 as the imaging unit 12031.

The imaging units 12101, 12102, 12103, 12104, and 12105 are provided, for example, at positions including a front nose, a side mirror, a rear bumper, a rear door, and an upper portion of a windshield in the vehicle interior of the vehicle 12100. The imaging unit 12101 provided at the front nose and the imaging unit 12105 provided at the upper part of the windshield in the vehicle interior mainly acquire an image in front of the vehicle 12100. The imaging units 12102 and 12103 provided at the side mirrors mainly acquire images of the side of the vehicle 12100. The imaging unit 12104 provided at the rear bumper or the rear door mainly acquires an image behind the vehicle 12100. The front images acquired by the imaging units 12101 and 12105 are mainly used for detecting a preceding vehicle, a pedestrian, an obstacle, a traffic light, a traffic sign, or a lane, for example.

Note that Fig. 26 illustrates an example of the imaging range of the imaging units 12101 to 12104. An imaging range 12111 indicates the imaging range of the imaging unit 12101 provided at the front nose, imaging ranges 12112 and 12113 indicate the imaging ranges of the imaging units 12102 and 12103 provided at the side mirrors, and an imaging range 12114 indicates the imaging range of the imaging unit 12104 provided at the rear bumper or the rear door. For example, by superimposing the image data captured by the imaging units 12101 to 12104, an overhead image when the vehicle 12100 is viewed from above is obtained.

At least one of the imaging units 12101 to 12104 may have a function of acquiring distance information. For example, at least one of the imaging units 12101 to 12104 may be a stereo camera including a plurality of imaging elements, or may be an imaging element having pixels for phase difference detection.

For example, the microcomputer 12051 uses the distance information obtained from the imaging units 12101 to 12104 to determine the distance to a three-dimensional object in the imaging ranges 12111 to 12114 and the temporal change of the distance (relative speed with respect to the vehicle 12100), whereby it is possible to extract, particularly as a preceding vehicle, the closest three-dimensional object on the traveling path of the vehicle 12100 and the three-dimensional object that travels at a predetermined speed (e.g., 0 km/h or more) in substantially the same direction as the vehicle 12100. Further, the microcomputer 12051 can set an inter-vehicle distance to be secured in advance before the preceding vehicle, and can perform automatic brake control (including follow-up stop control), automatic acceleration control (including follow-up start control), and the like. Thus, it is possible to perform the cooperative control for the purpose of automatic driving or the like to travel autonomously without relying on the operation of the driver.

For example, the microcomputer 12051 can classify three-dimensional object data related to the three-dimensional object, on the basis of the distance information obtained from the imaging units 12101 to 12104, extracts the three-dimensional objects such as two-wheeled vehicles, ordinary vehicles, large vehicles, pedestrians, power poles, or the like, and uses the extracted data for automatic avoidance of obstacles. For example, the microcomputer 12051 distinguishes obstacles around the vehicle 12100 between obstacles visible to the driver of the vehicle 12100 and obstacles difficult to recognize visually. The microcomputer 12051 determines the collision risk indicating the risk of collision with each obstacle and, if the collision risk is equal to or exceeds a setting value and indicates the possibility of collision, the microcomputer 12051 can assist driving to avoid collision by outputting an alarm to the driver via the audio speaker 12061 or the display unit 12062, or executing forced deceleration or avoidance steering via the drive system control unit 12010.

At least one of the imaging units 12101 to 12104 may be an infrared camera that detects infrared rays. For example, the microcomputer 12051 can recognize a pedestrian by determining whether a pedestrian is present in the captured images of the imaging units 12101 to 12104. Such pedestrian recognition is carried out, for example, by determining whether a person is a pedestrian by performing a pattern matching process on a sequence of feature points indicating a contour of the object and a procedure for extracting feature points in the captured images of the imaging units 12101 to 12104 as infrared cameras. When the microcomputer 12051 determines that a pedestrian exists in the captured images of the imaging units 12101 to 12104 and recognizes the pedestrian, the audio image output unit 12052 controls the display unit 12062 to superimpose and display a rectangular contour line for emphasizing the recognized pedestrian. Further, the audio image output unit 12052 may control the display unit 12062 so as to display an icon or the like indicating a pedestrian at a desired position.

As above, an example of a vehicle control system to which the technique according to the present disclosure can be applied has been described. The technique according to the present disclosure can be applied to the imaging unit 12031 among the configurations described above. Specifically, the pixel 120 having the pixel circuit 1 illustrated in Figs. 3, 7, and 15 to 20 can be applied to the imaging unit 12031. Applying the technique according to the present disclosure to the imaging unit 12031 enables to obtain a more easily viewable photographed image in which the occurrence of blooming is suppressed, so that the fatigue of the driver can be reduced.

### 7. Application to Endoscopic Surgery System

The technique according to the present disclosure may also be applied to an endoscopic surgery system.

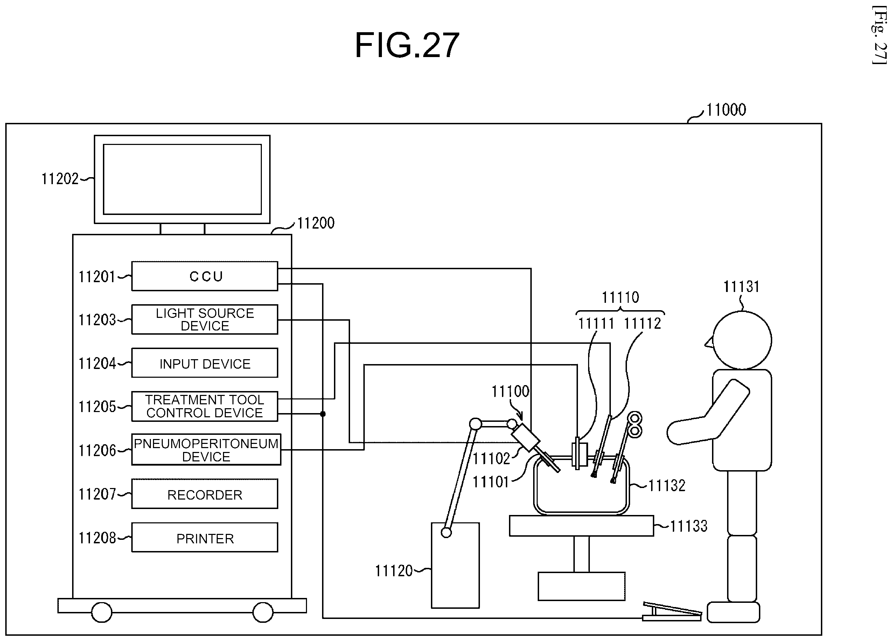

Fig. 27 is a diagram illustrating an example of a schematic configuration of an endoscopic surgery system to which the technique according to the present disclosure (the present technique) can be applied.

Fig. 27 illustrates a situation where an operator (doctor) 11131 is performing a surgery on a patient 11132 on a patient bed 11133 using an endoscopic surgery system 11000. As illustrated in the figure, the endoscopic surgery system 11000 includes an endoscope 11100, other surgical tools 11110 such as a pneumoperitoneum tube 11111 and an energy treatment tool 11112, a support arm device 11120 for supporting the endoscope 11100, and a cart 11200 equipped with various devices for endoscopic surgery.

The endoscope 11100 includes a lens barrel 11101 having a region of a predetermined length from a distal end inserted into the body cavity of the patient 11132, and a camera head 11102 connected to a proximal end of the lens barrel 11101. In the illustrated example, the endoscope 11100 configured as a so-called rigid endoscope having a hard lens barrel 11101 is illustrated, but the endoscope 11100 may be configured as a so-called flexible endoscope having a soft lens barrel.

An aperture into which the objective lens is fitted is provided at the distal end of the lens barrel 11101. A light source device 11203 is connected to the endoscope 11100, and light generated by the light source device 11203 is guided to the distal end of the lens barrel by a light guide extending inside the lens barrel 11101, and is directed toward an observation target in the body cavity of the patient 11132 through the objective lens. Note that the endoscope 11100 may correspond to a direct-view endoscope, a perspective-view endoscope, or a side-view endoscope.

An optical system and an imaging element are provided inside the camera head 11102, and the reflected light (observation light) from the observation target is focused on the imaging element by the optical system. The observation light is photoelectrically converted by the imaging element, and an electric signal corresponding to the observation light, that is, an image signal corresponding to the observation image is generated. The image signal is transmitted to a camera control unit (CCU) 11201 as RAW data.

The CCU 11201 includes a central processing unit (CPU), a graphics processing unit (GPU) etc., and controls operations of the endoscope 11100 and a display device 11202 in an integrated manner. Further, the CCU 11201 receives an image signal from the camera head 11102 and performs various types of image processing for displaying an image based on the image signal, such as development processing (demosaic processing), on the image signal.

The display device 11202 displays an image based on the image signal subjected to image processing by the CCU 11201 under the control of the CCU 11201.

The light source device 11203 includes, for example, a light source such as a light emitting diode (LED), and supplies the endoscope 11100 with irradiation light when imaging, for instance, the surgical site.

An input device 11204 is an input interface to the endoscopic surgery system 11000. The user can input various types of information and input instructions to the endoscopic surgery system 11000 via the input device 11204. For example, the user inputs instructions to change an imaging condition (for instance, type of irradiation light, magnification, and focal length) by the endoscope 11100.

A treatment tool control device 11205 controls driving of an energy treatment tool 11112 for cauterization and incision of tissue, sealing of a blood vessel, etc. A pneumoperitoneum device 11206 sends gas into the body cavity via the pneumoperitoneum tube 11111 to inflate the body cavity of the patient 11132 in order to ensure a visual field by the endoscope 11100 and ensure a working space of the operator. A recorder 11207 is a device that can record various types of information related to surgery. A printer 11208 is a device capable of printing various types of information related to surgery in various formats such as text, an image, a graph, etc.

Note that the light source device 11203 for supplying irradiation light to the endoscope 11100 at the time of photographing the surgical site may be constituted by a white light source composed of, for example, an LED, a laser light source, or a combination thereof. When the white light source is configured by a combination of RGB laser light sources, the output intensity and output timing of each color (each wavelength) can be controlled with high accuracy, and thus the light source device 11203 can adjust white balance of a captured image. In addition, in this case, the laser light from each of the RGB laser light sources is emitted to the observation target in a time-division manner, and driving of the imaging element of the camera head 11102 is controlled in synchronization with the irradiation timing, whereby the image corresponding to each of RGB can be captured in a time-division manner. According to this method, a color image can be obtained without providing a color filter in the imaging element.

In addition, the driving of the light source device 11203 may be controlled to change the intensity of light to be output at predetermined intervals. By controlling driving of the imaging element of the camera head 11102 in synchronization with the timing of the change of the light intensity to acquire an image in a time-division manner, and synthesizing the image, it is possible to generate an image in a high dynamic range without so-called underexposure and overexposure.

Further, the light source device 11203 may be configured to be able to supply light in a predetermined wavelength band corresponding to special light observation. In special light observation, for example, wavelength dependence of light absorption in body tissue is used to irradiate light in a narrower band than that of irradiation light during normal observation (that is, white light), thereby performing so-called narrow band imaging for imaging predetermined tissue such as a blood vessel on a mucosal surface at high contrast. Alternatively, in special light observation, a fluorescence observation for obtaining an image by fluorescence generated by irradiating excitation light may be performed. In fluorescence observation, body tissue may be irradiated with excitation light and fluorescence from the body tissue may be observed (autofluorescence observation), or a reagent such as indocyanine green (ICG) may be locally injected into body tissue and the body tissue may be irradiated with excitation light corresponding to a fluorescence wavelength of the reagent to obtain a fluorescence image. The light source device 11203 can be configured to be able to supply narrowband light and/or excitation light corresponding to such special light observation.

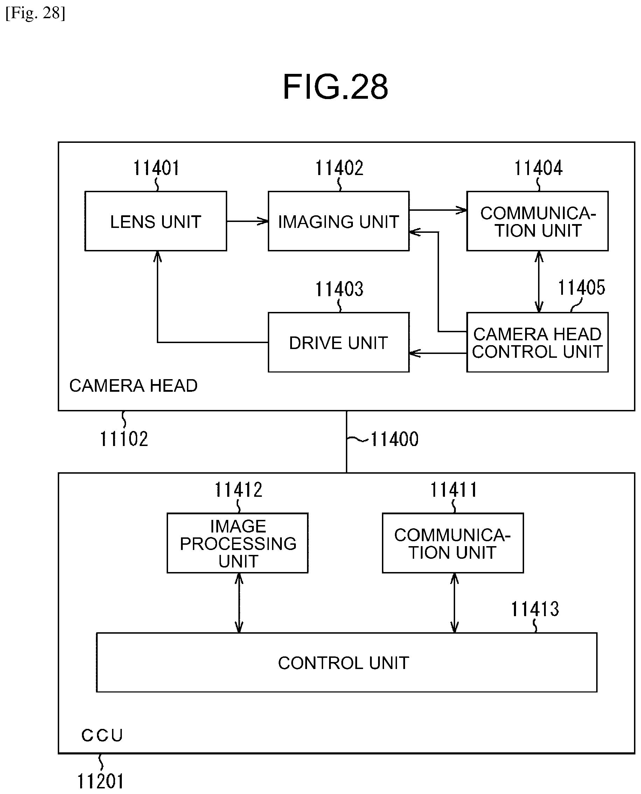

Fig. 28 is a block diagram illustrating an example of a functional configuration of the camera head 11102 and the CCU 11201 illustrated in Fig. 27.

The camera head 11102 includes a lens unit 11401, an imaging unit 11402, a drive unit 11403, a communication unit 11404, and a camera head control unit 11405. The CCU 11201 includes a communication unit 11411, an image processing unit 11412, and a control unit 11413. The camera head 11102 and the CCU 11201 are mutually communicably connected by a transmission cable 11400.

The lens unit 11401 is an optical system provided at a portion connected to the lens barrel 11101. Observation light taken in from the distal end of the lens barrel 11101 is guided to the camera head 11102 and enters the lens unit 11401. The lens unit 11401 is configured by combining a plurality of lenses including a zoom lens and a focus lens.

The imaging unit 11402 includes an imaging element. The number of imaging elements included in the imaging unit 11402 may be one (so-called single plate system) or multiple (so-called multi-plate system). In the case where the imaging unit 11402 is constituted of a multi-plate system, for example, image signals corresponding to RGB may be generated by each imaging element, and these signals may be combined to obtain a color image. Alternatively, the imaging unit 11402 may be configured to include a pair of imaging elements for acquiring respective image right-eye and left-eye image signals corresponding to three-dimensional (3D) display. When 3D display is performed, the operator 11131 can more accurately comprehend a depth of living tissue at a surgical site. When the imaging unit 11402 is configured as a multi-plate system, a plurality of lens units 11401 may be provided corresponding to respective imaging elements.

In addition, the imaging unit 11402 may not necessarily be provided in the camera head 11102. For example, the imaging unit 11402 may be provided inside the lens barrel 11101 immediately behind the objective lens.

The drive unit 11403 includes an actuator and moves the zoom lens and the focus lens of the lens unit 11401 by a predetermined distance along the optical axis under the control of the camera head control unit 11405. Thus, the magnification and the focus of the image captured by the imaging unit 11402 can be appropriately adjusted.

The communication unit 11404 includes a communication device for transmitting and receiving various types of information to and from the CCU 11201. The communication unit 11404 transmits the image signal obtained from the imaging unit 11402 as RAW data to the CCU 11201 via the transmission cable 11400.

In addition, the communication unit 11404 receives a control signal for controlling the driving of the camera head 11102 from the CCU 11201 and supplies the control signal to the camera head control unit 11405. The control signal includes, for example, information related to the imaging condition such as information for specifying a frame rate of the captured image, information for specifying an exposure value at the time of imaging, and/or information for specifying the magnification and focus of the captured image.

Note that the above-described imaging conditions such as the frame rate, the exposure value, the magnification, and the focus may be appropriately specified by the user or may be automatically set by the control unit 11413 of the CCU 11201 based on the acquired image signal. In the latter case, a so-called auto exposure (AE) function, an auto focus (AF) function and an auto white balance (AWB) function are mounted on the endoscope 11100.

The camera head control unit 11405 controls the driving of the camera head 11102 based on a control signal from the CCU 11201 received via the communication unit 11404.

The communication unit 11411 includes a communication device for transmitting and receiving various types of information to and from the camera head 11102. The communication unit 11411 receives an image signal transmitted from the camera head 11102 via the transmission cable 11400.

In addition, the communication unit 11411 transmits a control signal for controlling driving of the camera head 11102 to the camera head 11102. The image signal and the control signal can be transmitted by electric communication or optical communication.

The image processing unit 11412 performs various types of image processing on an image signal that is RAW data transmitted from the camera head 11102.

The control unit 11413 performs various controls related to the imaging of the surgical site or the like by the endoscope 11100 and the display of the captured image obtained by the imaging of the surgical site or the like. For example, the control unit 11413 generates a control signal for controlling the driving of the camera head 11102.

In addition, the control unit 11413 causes the display device 11202 to display a captured image of the surgical site or the like based on an image signal subjected to image processing by the image processing unit 11412. In this instance, the control unit 11413 may recognize various objects in the captured image using various image recognition technologies. For example, the control unit 11413 can recognize a surgical tool such as forceps, a specific living body part, bleeding, and mist at the time of using the energy treatment tool 11112 by detecting, for instance, a shape, a color of an edge of an object included in the captured image. When the captured image is displayed on the display device 11202, the control unit 11413 may use a recognition result to superimpose and display various types of operation support information on the image of the surgical site. When the operation support information is superimposed and displayed to be presented to the operator 11131, the burden on the operator 11131 can be reduced and the surgery by the operator 11131 can be performed more safely and reliably.

The transmission cable 11400 connecting the camera head 11102 and the CCU 11201 to each other is an electric signal cable corresponding to electric signal communication, an optical fiber corresponding to optical communication, or a composite cable thereof.

Here, in the illustrated example, the communication is performed by wire using the transmission cable 11400, but the communication between the camera head 11102 and the CCU 11201 may be performed wirelessly.

As above, an example of the endoscopic surgery system to which the technique according to the present disclosure can be applied has been described above. The technique according to the present disclosure can be applied to the endoscope 11100 and the imaging unit 11402 of the camera head 11102 among the configurations described above. Specifically, the pixel 120 having the pixel circuit 1 illustrated in Figs. 3, 7, and 15 to 20 can be applied to the endoscope 11100 and the imaging unit 11402 of the camera head 11102. Applying the technique according to the present disclosure to the endoscope 11100 and the imaging unit 11402 of the camera head 11102 enables to obtain a clearer image of a surgical site in which the occurrence of blooming is suppressed, so that the operator can accurately confirm the surgical site.

Although the endoscopic surgery system has been described herein as an example, the technique according to the present disclosure may be applied to, for example, a microscopic surgery system.

While the embodiments of the present disclosure have been described above, the technical scope of the present disclosure is not limited to the embodiments described above as they are, and various modifications may be made without departing from the gist of the present disclosure. Components spanning different embodiments and variations may also be combined as appropriate.

The effects described herein are merely examples and not limited thereto, and other effects may be provided.

### Reference Signs List

1 Pixel circuit
10 Photoelectric conversion film
11 Reset transistor
12 Amplifier transistor
13 Select transistor
14 Transfer transistor
15 Discharge transistor
16, 17 Capacitor
100 Electronic device
101 Imaging lens
102 Image sensor
103 Processor
104 Storage unit
120 Pixel
121 Pixel array unit
122 Vertical drive circuit
123 Column processing circuit
124 Horizontal drive circuit
125 System control unit
126 Signal processing unit
127 Data storage unit

## Claims

1. A light-detecting device (1) comprising:
a photoelectric conversion film (10) configured to generate a hole as a photoelectric charge;
a readout circuit including:
a first node (21) configured to hold the photoelectric charge generated by the photoelectric conversion film (10), wherein the first node (21) is connected to the photoelectric conversion film (10),
a second node (20) configured to hold the photoelectric charge transferred from the first node (21),
a P-type metal oxide semiconductor (MOS) reset transistor (11) connected with a source to the second node (20) and with a drain to a constant voltage source (VDR), wherein the P-type MOS reset transistor (11) is configured to discharge the photoelectric charge held by the second node (20) to the constant voltage source (VDR),
an amplifier transistor (12), wherein a gate of the amplifier transistor (12) is connected to the second node (20), wherein the amplifier transistor (12) is configured to cause a voltage of a voltage value corresponding to a charge amount of the photoelectric charge held by the second node (20) to appear on a signal line,
a select transistor (13) configured to switch connection between the amplifier transistor (12) and the signal line,
a trigger transistor (14) connected to the first node (21) and the second node (20), wherein the trigger transistor (14) is configured to switch connection between the first node (21) and the second node (20), and
a discharge transistor (15) connected to the first node (21) and the constant voltage source (VDR), wherein the discharge transistor (15) is configured to discharge the photoelectric charge held by the first node (21) to the constant voltage source (VDR); and
wherein the light detecting device is configured to set the potentials of the respective barriers formed by the trigger transistor (14) and the discharge transistor (15), turn-off the discharge transistor (15) and turn on the trigger transistor (14) such that an overflow path is formed beyond each barrier formed by each of the trigger transistor (14) and the discharge transistor (15) for the holes accumulated in the second node (20) before the holes flow out to another second node (20) via an inter-pixel barrier formed between adjacent second nodes (20), thereby holes lower than the potential of the barrier generated by the discharge transistor (15) are discharged from the second node (20) to the constant voltage source (VDR).

2. The light-detecting device (1) according to claim 1, wherein the discharge transistor (15) is a P-type MOS transistor.

3. The light-detecting device (1) according to claim 2, wherein the trigger transistor (14) is a P-type MOS transistor.

4. The light-detecting device (1) according to claim 3, wherein the amplifier and select transistors (12, 13) are P-type MOS transistors.

5. The light-detecting device according to claim 4, wherein the amplifier and select transistors (12, 13) are disposed in a first line in a plan view.

6. The light-detecting device (1) according to claim 5, wherein the P-type MOS reset transistor (11), the trigger transistor (14), and the discharge transistor (15) are disposed in a second line an in parallel in a longitudinal direction in the plan view.

7. The light-detecting device (1) according to anyone of claims 1 to 6, wherein the photoelectric conversion film (10) includes one of indium gallium arsenide (InGaAs), indium arsenide antimonide (InAsSb), indium arsenide (InAs), indium antimonide (InSb), mercury cadmium tellurium (HgCdTe), germanium (Ge), a quantum dot, and an organic compound.

8. The light-detecting device (1) according to anyone of claims 1 to 7, wherein the photoelectric conversion film (10) has a p-type impurity region connected to the first node (20, 21).

9. The light-detecting device (1) according to anyone of claims 1 to 8, wherein an electrode extending from the photoelectric conversion film (10) and an electrode extending from the readout circuit are directly bonded and electrically conductive.

10. The light-detecting device (1) according to anyone of claims 1 to 9, wherein a terminal extending from the photoelectric conversion film (10) and a terminal extending from the readout circuit are connected by a bump electrode (654) and electrically conductive.

11. An electronic device (100) comprising:
a pixel array unit (121) in which a plurality of pixels (120) are arranged in row and column directions;
a drive circuit (122, 124) configured to drive pixels to be read out in the plurality of pixels (120);
a processing circuit (123) configured to read out pixel signals from the pixels to be read out which are driven by the drive circuit (122, 124); and
a control unit (125) configured to control the drive circuit (122, 124) and the processing circuit (123), wherein each of the plurality of pixels (120) includes a light detecting device according to anyone of claims 1 to 10.

## Patentansprüche

1. Lichterfassungsvorrichtung (1), umfassend:
eine photoelektrische Umwandlungsfolie (10), die konfiguriert ist, um ein Defektelektron als eine photoelektrische Ladung zu erzeugen;
eine Ausleseschaltung, die einschließt:
einen ersten Knoten (21), der konfiguriert ist, um die photoelektrische Ladung, die durch die photoelektrische Umwandlungsfolie (10) erzeugt wird, zu halten, wobei der erste Knoten (21) mit der photoelektrischen Umwandlungsfolie (10) verbunden ist,
einen zweiten Knoten (20), der konfiguriert ist, um die photoelektrische Ladung, die von dem ersten Knoten (21) übertragen wird, zu halten,
einen P-Typ-Metalloxid-Halbleiter(MOS)-Rücksetztransistor (11), der mit einer Quelle mit dem zweiten Knoten (20) und mit einem Drain mit einer Konstantspannungsquelle (VDR) verbunden ist, wobei der P-Typ-MOS-Rücksetztransistor (11) konfiguriert ist, um die photoelektrische Ladung, die durch den zweiten Knoten (20) gehalten wird, an die Konstantspannungsquelle (VDR) zu entladen,
einen Verstärkertransistor (12), wobei ein Gate des Verstärkertransistors (12) mit dem zweiten Knoten (20) verbunden ist, wobei der Verstärkertransistor (12) konfiguriert ist, um eine Spannung mit einem Spannungswert, der einer Ladungsmenge der photoelektrischen Ladung, die durch den zweiten Knoten (20) gehalten wird, entspricht, auf einer Signalleitung erscheinen zu lassen,
einen Auswahltransistor (13), der konfiguriert ist, um die Verbindung zwischen dem Verstärkertransistor (12) und der Signalleitung umzuschalten,
einen Trigger-Transistor (14), der mit dem ersten Knoten (21) und dem zweiten Knoten (20) verbunden ist, wobei der Trigger-Transistor (14) konfiguriert ist, um die Verbindung zwischen dem ersten Knoten (21) und dem zweiten Knoten (20) umzuschalten, und
einen Entladetransistor (15), der mit dem ersten Knoten (21) und der Konstantspannungsquelle (VDR) verbunden ist, wobei der Entladetransistor (15) konfiguriert ist, um die photoelektrische Ladung, die durch den ersten Knoten (21) gehalten wird, an die Konstantspannungsquelle (VDR) zu entladen; und
wobei die Lichterfassungsvorrichtung konfiguriert ist, um die Potentiale der jeweiligen Barrieren, die durch den Trigger-Transistor (14) und den Entladetransistor (15) ausgebildet werden, einzustellen, den Entladetransistor (15) auszuschalten und den Trigger-Transistor (14) einzuschalten, derart, dass ein Überlaufpfad über jede Barriere, die durch den Trigger-Transistor (14) und den Entladetransistor (15) ausgebildet wird, für die Defektelektronen, die in dem zweiten Knoten (20) angesammelt sind, ausgebildet wird, bevor die Defektelektronen zu einem anderen zweiten Knoten (20) über eine Interpixelbarriere, die zwischen angrenzenden zweiten Knoten (20) ausgebildet ist, abfließen, wodurch Defektelektronen, die niedriger als das Potential der Barriere sind, die durch den Entladetransistor (15) erzeugt wird, von dem zweiten Knoten (20) zu der Konstantspannungsquelle (VDR) entladen werden.

2. Lichterfassungsvorrichtung (1) nach Anspruch 1, wobei der Entladetransistor (15) ein P-Typ-MOS-Transistor ist.

3. Lichterfassungsvorrichtung (1) nach Anspruch 2, wobei der Trigger-Transistor (14) ein P-Typ-MOS-Transistor ist.

4. Lichterfassungsvorrichtung (1) nach Anspruch 3, wobei die Verstärker- und Auswahltransistoren (12, 13) P-Typ-MOS-Transistoren sind.

5. Lichterfassungsvorrichtung nach Anspruch 4, wobei die Verstärker- und Auswahltransistoren (12, 13) in einer ersten Linie in einer Draufsicht eingerichtet sind.

6. Lichterfassungsvorrichtung (1) nach Anspruch 5, wobei der P-Typ-MOS-Rücksetztransistor (11), der Trigger-Transistor (14) und der Entladetransistor (15) in einer zweiten Linie und parallel in einer Längsrichtung in der Draufsicht eingerichtet sind.

7. Lichterfassungsvorrichtung (1) nach einem der Ansprüche 1 bis 6, wobei die photoelektrische Umwandlungsfolie (10) eines von Indiumgalliumarsenid (InGaAs), Indiumarsenidantimonid (InAsSb), Indiumarsenid (InAs), Indiumantimonid (InSb), Quecksilbercadmiumtellur (HgCdTe), Germanium (Ge), einen Quantenpunkt und eine organische Verbindung einschließt.

8. Lichterfassungsvorrichtung (1) nach einem der Ansprüche 1 bis 7, wobei die photoelektrische Umwandlungsfolie (10) eine P-Typ-Verunreinigungsregion aufweist, die mit dem Erfassungsknoten (20, 21) verbunden ist.

9. Lichterfassungsvorrichtung (1) nach einem der Ansprüche 1 bis 8, wobei eine Elektrode, die sich von der photoelektrischen Umwandlungsfolie (10) erstreckt, und eine Elektrode, sich von der Ausleseschaltung erstreckt, direkt verbunden und elektrisch leitfähig sind.

10. Lichterfassungsvorrichtung (1) nach einem der Ansprüche 1 bis 9, wobei ein Anschluss, der sich von der photoelektrischen Umwandlungsfolie (10) erstreckt, und ein Anschluss, der sich von der Ausleseschaltung erstreckt, durch eine Bump-Elektrode (654) verbunden und elektrisch leitend sind.

11. Elektronische Vorrichtung (100), umfassend:
eine Pixelarray-Einheit (121), in der eine Vielzahl von Pixeln (120) in Reihen- und Spaltenrichtung angeordnet ist;
eine Ansteuerungsschaltung (122, 124), die konfiguriert ist, um Pixel, die in der Vielzahl von Pixeln (120) ausgelesen werden sollen, anzusteuern;
eine Verarbeitungsschaltung (123), die konfiguriert ist, um Pixelsignale von den Pixeln, die auszulesen sind, die durch die der Ansteuerungsschaltung (122, 124) angesteuert werden, auszulesen; und
eine Steuereinheit (125), die konfiguriert ist, um die Ansteuerungsschaltung (122, 124) und die Verarbeitungsschaltung (123) zu steuern, wobei jedes der Vielzahl von Pixeln (120) eine Lichterfassungsvorrichtung nach einem der Ansprüche 1 bis 10 einschließt.

## Revendications

1. Dispositif de détection de lumière (1) comprenant :
un film de conversion photoélectrique (10) configuré pour générer un trou en tant que charge photoélectrique ;
un circuit de lecture comportant :
un premier nœud (21) configuré pour conserver la charge photoélectrique générée par le film de conversion photoélectrique (10), dans lequel le premier nœud (21) est connecté au film de conversion photoélectrique (10),
un second nœud (20) configuré pour conserver la charge photoélectrique transférée du premier nœud (21),
un transistor de réinitialisation à semi-conducteur à oxyde de métal (MOS) de type P (11) connecté avec une source au second nœud (20) et avec un drain à une source de tension constante (VDR), dans lequel le transistor de réinitialisation MOS de type P (11) est configuré pour décharger la charge photoélectrique conservée par le second nœud (20) à la source de tension constante (VDR),
un transistor d'amplification (12), dans lequel une grille du transistor d'amplification (12) est connectée au second nœud (20), dans lequel le transistor d'amplification (12) est configuré pour amener une tension d'une valeur de tension correspondant à une quantité de charge de la charge photoélectrique conservée par le second nœud (20) à apparaître sur une ligne de signal,
un transistor de sélection (13) configuré pour commuter une connexion entre le transistor d'amplification (12) et la ligne de signal,
un transistor de déclenchement (14) connecté au premier nœud (21) et au second nœud (20), dans lequel le transistor de déclenchement (14) est configuré pour commuter une connexion entre le premier nœud (21) et le second nœud (20), et
un transistor de décharge (15) connecté au premier nœud (21) et à la source de tension constante (VDR), dans lequel le transistor de décharge (15) est configuré pour décharger la charge photoélectrique conservée par le premier nœud (21) à la source de tension constante (VDR) ; et
dans lequel le dispositif de détection de lumière est configuré pour régler les potentiels des barrières respectives formées par le transistor de déclenchement (14) et le transistor de décharge (15), désactiver le transistor de décharge (15) et activer le transistor de déclenchement (14) de telle sorte qu'un chemin de dépassement est formé au-delà de chaque barrière formée par chacun parmi le transistor de déclenchement (14) et le transistor de décharge (15) pour les trous accumulés dans le second nœud (20) avant que les trous ne s'échappent vers un autre second nœud (20) par l'intermédiaire d'une barrière interpixel formée entre des seconds nœuds (20) adjacents, de ce fait des trous inférieurs au potentiel de la barrière générée par le transistor de décharge (15) sont déchargés du second nœud (20) vers la source de tension constante (VDR).

2. Dispositif de détection de lumière (1) selon la revendication 1, dans lequel le transistor de décharge (15) est un transistor MOS de type P.

3. Dispositif de détection de lumière (1) selon la revendication 2, dans lequel le transistor de déclenchement (14) est un transistor MOS de type P.

4. Dispositif de détection de lumière (1) selon la revendication 3, dans lequel les transistors d'amplification et de sélection (12, 13) sont des transistors MOS de type P.

5. Dispositif de détection de lumière selon la revendication 4, dans lequel les transistors d'amplification et de sélection (12, 13) sont disposés dans une première ligne dans une vue en plan.

6. Dispositif de détection de lumière (1) selon la revendication 5, dans lequel le transistor de réinitialisation MOS de type P (11), le transistor de déclenchement (14) et le transistor de décharge (15) sont disposés dans une seconde ligne en parallèle dans une direction longitudinale dans la vue en plan.

7. Dispositif de détection de lumière (1) selon l'une quelconque des revendications 1 à 6, dans lequel le film de conversion photoélectrique (10) comporte l'un parmi arséniure d'indium et de gallium (InGaAs), arséniure antimoniure d'indium (InAsSb), arséniure d'indium (InAs), antimoniure d'indium (InSb), mercure-cadmium-tellure (HgCdTe), germanium (Ge), un point quantique et un composé organique.

8. Dispositif de détection de lumière (1) selon l'une quelconque des revendications 1 à 7, dans lequel le film de conversion photoélectrique (10) a une région d'impureté de type p connectée au premier nœud (20, 21).

9. Dispositif de détection de lumière (1) selon l'une quelconque des revendications 1 à 8, dans lequel une électrode s'étendant à partir du film de conversion photoélectrique (10) et une électrode s'étendant à partir du circuit de lecture sont directement liées et électriquement conductrices.

10. Dispositif de détection de lumière (1) selon l'une quelconque des revendications 1 à 9, dans lequel une borne s'étendant à partir du film de conversion photoélectrique (10) et une borne s'étendant à partir du circuit de lecture sont connectées par une électrode à bosse (654) et électriquement conductrices.

11. Dispositif électronique (100) comprenant :
une unité de matrice de pixels (121) dans laquelle une pluralité de pixels (120) sont agencés dans des directions de rangée et colonne ;
un circuit de pilotage (122, 124) configuré pour piloter des pixels à lire dans la pluralité de pixels (120) ;
un circuit de traitement (123) configuré pour lire des signaux de pixels provenant des pixels à lire qui sont pilotés par le circuit de pilotage (122, 124) ; et
une unité de commande (125) configurée pour commander le circuit de pilotage (122, 124) et le circuit de traitement (123), dans lequel chacun parmi la pluralité de pixels (120) comporte un dispositif de détection de lumière selon l'une quelconque des revendications 1 à 10.
